(19) Europäisches Patentamt
European Patent Office
Office européen des brevets

(11) **EP 4 745 101 A1**

(12) **EUROPEAN PATENT APPLICATION**
published in accordance with Art. 153(4) EPC

(43) Date of publication:
**20.05.2026 Bulletin 2026/21**

(21) Application number: **25747761.2**

(22) Date of filing: **23.01.2025**

(51) International Patent Classification (IPC):
**C03C 10/04** (2006.01)   **C03C 21/00** (2006.01)

(86) International application number:
**PCT/CN2025/074426**

(87) International publication number:
**WO 2025/162193 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2024 CN 202410156329**

(71) Applicant: **Chongqing Aureavia Hi-tech Glass Co., Ltd**
**Chongqing 400714 (CN)**

(72) Inventors:
• **ZHOU, Jingpeng**
**Beibei District**
**Chongqing 400714 (CN)**

• **LIU, Zhiqiang**
**Beibei District**
**Chongqing 400714 (CN)**
• **TIAN, Qian**
**Beibei District**
**Chongqing 400714 (CN)**
• **HUANG, Hao**
**Beibei District**
**Chongqing 400714 (CN)**
• **LUO, Feng**
**Beibei District**
**Chongqing 400714 (CN)**

(74) Representative: **Dantz, Dirk**
**Dantz IP & Law**
**Kurfürstendamm 43**
**10719 Berlin (DE)**

(54) **HIGH-LITHIUM-CONTENT GLASS-CERAMIC, CHEMICALLY STRENGTHENED GLASS-CERAMIC AND USE THEREOF**

(57)    The present application relates to the technical field of glass-ceramics, and in particular to a high-lithium-content glass-ceramic, a chemically strengthened glass-ceramic, and a use thereof. The high-lithium-content glass-ceramic comprises a lithium disilicate crystal phase as a primary crystal phase and has a specific content range of each oxide. On the basis of the molar percentage content of each oxide in the composition of the high-lithium-content glass-ceramic, the composition of the high-lithium-content glass-ceramic satisfies: $0.20 \leq 2.25 \times Li_2O - 8 \times ZrO_2 - 0.2 \times CaO \leq 0.41$. The high-lithium-content glass-ceramic of the present application can not only achieve high-temperature chemical strengthening, avoiding the problem of "surface cracking" and/or surface "delamination" occurring in a high-temperature salt bath, but also ensure that a chemically strengthened glass-ceramic having a high stress level and high mechanical strength performance can be prepared.

FIG. 8

**Description**

**CROSS-REFERENCE TO RELATED APPLICATIONS**

The present invention claims priority to Chinese Patent Application No. 202410156329.0 filed on February 2, 2024 with the China National Intellectual Property Administration, and entitled "HIGH-LITHIUM-CONTENT GLASS-CERAMIC, CHEMICALLY STRENGTHENED GLASS-CERAMIC AND USE THEREOF", the entire contents of which are incorporated herein by reference.

**TECHNICAL FIELD**

The present invention belongs to the technical field of microcrystalline glass, and specifically relates to high-lithium-content microcrystalline glass (high-lithium-content glass-ceramic), chemically strengthened microcrystalline glass (chemically strengthened glass-ceramic) and use thereof.

**BACKGROUND ART**

As a solid material containing a microcrystalline phase and a glass phase, microcrystalline glass has obvious advantages in overall strength performance compared with conventional glass because a large number of nanoscale tiny crystals contained therein can hinder micro-crack propagation. Currently, microcrystalline glass has been gradually applied to portable electronic devices as cover glass of electronic devices, such as display screen protective glass or rear cover glass.

Lithium disilicate ($Li_2Si_2O_5$) crystalline phase is an orthorhombic crystal based on a $[Si_2O_5]$ tetrahedral array, with the crystal being flat or plate-shaped. In interior of microcrystalline glass, lithium disilicate crystals are randomly oriented interlocking microstructures, and force paths of cracks to twist when passing through the crystals, thereby preventing crack propagation, and improving strength and fracture toughness of the microcrystalline glass. Moreover, with a refractive index close to that of glass matrix (e.g., base glass for preparing microcrystalline glass), the lithium disilicate crystals are ideal crystalline phases for preparing high-transparency microcrystalline glass. It can be seen therefrom that the microcrystalline glass having a primary crystalline phase lithium disilicate has great application potential in the cover glass market of electronic products or electronic devices.

**SUMMARY**

Cover glass of electronic devices, especially cover glass of portable electronic devices (such as mobile phones, watches, and PADs), generally has a thickness lower than 2 mm. Exemplarily, the thickness of cover glass of electronic devices may be about 0.1 mm-2.0 mm. Therefore, in order to meet high performance requirements such as impact resistance, compression resistance, scratch resistance, and abrasion resistance, the cover glass of the electronic devices usually needs to undergo a chemical strengthening treatment, so as to further improve a mechanical strength performance thereof. The term "chemically strengthening" herein refers to placing glass in a molten salt bath, and performing ion exchange between alkali metal ions having a large ionic radius in the molten salt and alkali metal ions having a small ionic radius in the glass, so as to generate compressive stress on a glass surface. In order to improve efficiency of the chemical strengthening treatment and reduce production costs, it is widely considered in the art to use a high-temperature molten salt bath to chemically strengthen glass.

However, microcrystalline glass having a high lithium content and containing the primary crystalline phase lithium disilicate, when being subjected to the chemical strengthening treatment in a molten salt bath at a high temperature exceeding 480 °C, is prone to "surface cracking" phenomenon and/or "delamination" phenomenon. "Surface cracking" herein mainly refers to that after the microcrystalline glass is chemically strengthened, numerous irregular cracks appear on the surface; and "delamination" mainly refers to that after the microcrystalline glass is chemically strengthened, an outermost layer falls off from the microcrystalline glass, with a thickness of a delaminated glass layer being between several microns and tens of microns. However, the "surface cracking" phenomenon and/or "delamination" phenomenon will cause great reduction in drop resistance and mechanical strength of the microcrystalline glass, and even cause surface failure of the microcrystalline glass after the chemical strengthening treatment, rendering it unusable.

An objective of the present invention is to provide high-lithium-content microcrystalline glass adapted to high-temperature chemical strengthening and having a primary crystalline phase lithium disilicate, chemically strengthened microcrystalline glass and use thereof, so as to overcome defects of "surface cracking" and/or "delamination" existing in the microcrystalline glass having a high lithium content and containing the primary crystalline phase lithium disilicate when being chemically strengthened in an environment of high-temperature salt bath (e.g., a salt bath temperature being no less than 480 °C). The high-lithium-content microcrystalline glass, after being chemically strengthened at high temperatures, not only overcomes the problems of "surface cracking" and/or "delamination", but also can be used for producing chemically strengthened microcrystalline glass having a high stress level after high-temperature chemical strengthening. By chemically strengthening the high-lithium-content microcrystalline glass at a high temperature, the chemically strengthened microcrystalline glass having a high stress level and a high mechanical strength performance is obtained, which can greatly improve efficiency of preparing high-strength chemically strengthened microcrystalline glass.

In order to achieve the above objective, the present invention provides technical solutions as follows.

The present invention provides a high-lithium-content microcrystalline glass, where the high-lithium-content microcrystalline glass contains a lithium disilicate crystalline phase, where the lithium disilicate crystalline phase has a higher weight percentage than other crystalline phases present in the high-lithium-content microcrystalline glass;

in terms of molar percentage of oxides, a composition of the high-lithium-content microcrystalline glass includes: $SiO_2$: 41.00 mol%-69.50 mol%, $Al_2O_3$: 0.00 mol%-2.00 mol%, $P_2O_3$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and in terms of contents of various oxides represented by molar percentage in the composition of the high-lithium-content microcrystalline glass, the composition of the high-lithium-content microcrystalline glass satisfies: $0.20 \leq 2.25 \times Li_2O - 8 \times ZrO_2 - 0.2 \times CaO \leq 0.41$, optionally, $0.21 \leq 2.25 \times Li_2O - 8 \times ZrO_2 - 0.2 \times CaO \leq 0.39$. By optimizing glass formulations, making various constituent components satisfy specific content relationships, and enabling interaction between various constituent components, on one hand, it is beneficial to ensure precipitation of a desired content of the lithium disilicate crystalline phase, and restrict precipitation of other crystalline phases (for example, petalite crystalline phase), thereby helping to ensure to obtain the microcrystalline glass having high intrinsic strength and excellent optical properties and taking lithium disilicate as a primary crystalline phase, and on the other hand, it is conducive to ensuring the microcrystalline glass to satisfy the specific composition and structure, so as to ensure that it can be chemically strengthened at high temperatures, without the problems of "surface cracking" and/or surface "delamination" in a high-temperature chemical strengthening process, thus contributing to improving the chemical strengthening efficiency thereof, and being capable of ensuring the prepared chemically strengthened microcrystalline glass to satisfy a high stress level (e.g., to have high CS_50, |CT_AV|, DOL_0, etc.) and a high mechanical strength performance.

In some embodiments of the present invention, in terms of contents of various oxides represented by molar percentage in the composition of the high-lithium-content microcrystalline glass, the composition of the high-lithium-content microcrystalline glass further satisfies: $0.25 \leq (2.2 \times ZrO_2 + 0.35 \times CaO + Na_2O) / Li_2O \leq 0.45$; optionally, $0.27 \leq (2.2 \times ZrO_2 + 0.35 \times CaO + Na_2O) / Li_2O \leq 0.43$. By enabling the composition of the microcrystalline glass to satisfy the relational expressions, it is beneficial to avoid the phenomena of "surface cracking" and/or "delamination" of the microcrystalline glass when being strengthened in a molten bath of high-temperature molten salt while ensuring the high-lithium-content microcrystalline glass to have relatively high intrinsic strength and excellent optical properties.

In some embodiments of the present invention, in terms of contents of various oxides represented by molar percentage in the composition of the high-lithium-content microcrystalline glass, the composition of the high-lithium-content microcrystalline glass satisfies:

$0 \leq (CaO + MgO + ZnO + Na_2O + K_2O) / (ZrO_2 + Li_2O) \leq 0.15$; and/or
$0.90 \leq SiO_2 + Li_2O \leq 0.95$; and/or
$2.00 \leq SiO_2 / Li_2O \leq 2.30$; and/or
$0 \leq (CaO + SrO) / ZrO_2 \leq 1.50$; and/or
$0 \leq Al_2O_3 / (SiO_2 + Al_2O_3) \leq 0.03$. By making the composition satisfy at least one of the above relational expressions, it is beneficial to further improve the structure of the glass, thereby facilitating the preparation of the high-lithium-content microcrystalline glass which satisfies a specific structure and has an excellent performance (especially, optical properties, strength performance, etc.), and it is also conducive to ensuring a chemical strengthening effect of the high-lithium-content microcrystalline glass, and ensuring the high-lithium-content microcrystalline glass to be chemically strengthened to prepare the chemically strengthened microcrystalline glass having a high stress level, excellent mechanical strength performance and excellent damage resistance.

It should be noted that, in various expressions of the present invention, content percentages in terms of mole percentages are put into various expressions, that is, molar unit is not involved in calculation of the expressions. Exemplarily, the content of $Al_2O_3$ in terms of molar percentage is 2%, and 2% is put into the expressions for calculation.

In some embodiments of the present invention, in terms of molar percentage of oxides, in the high-lithium-content microcrystalline glass:

a content of $SiO_2$ is 60.00 mol%-65.00 mol%, and optionally, the content of $SiO_2$ is 61.00 mol%-63.50 mol%; and/or a content of $Li_2O$ is 27.50 mol%-31.00 mol%, and optionally, the content of $Li_2O$ is 28.00 mol%-30.50 mol%; and/or a content of $ZrO_2$ is 3.00 mol%-6.00 mol%, and optionally, the content of $ZrO_2$ is 3.50 mol%-6.00 mol%; and/or a content of $P_2O_5$ is 1.50 mol%-2.50 mol%, and optionally, the content of $P_2O_5$ is 1.60 mol%-2.10 mol%; and/or a content of CaO is 0.00 mol%-4.00 mol%, and optionally, the content of CaO is 0.00 mol%-2.00 mol%. By adjusting the composition of the high-lithium-content microcrystalline glass, it is beneficial to enable the high-lithium-content microcrystalline glass to obtain a relatively high mechanical strength performance and damage resistance.

In some embodiments of the present invention, in terms of molar percentage of oxides, the composition of the high-lithium-content microcrystalline glass further includes: $Y_2O_3$: 0.00 mol%-1.00 mol%, $La_2O_3$: 0.00 mol%-1.00 mol%, and $Ta_2O_5$: 0.00 mol%-1.00 mol%. In the present invention, selectively adding an appropriate amount of $Y_2O_3$, $La_2O_3$ or $Ta_2O_3$ helps to increase density of the high-lithium-content microcrystalline glass and increase the Young's modulus thereof, but may also increase a refractive index of the high-lithium-content microcrystalline glass, and reduce optical properties of the high-lithium-content microcrystalline glass.

In some embodiments of the present invention, in terms of contents of various oxides represented by molar percentage in the composition of the high-lithium-content microcrystalline glass, the composition of the high-lithium-content microcrystalline glass satisfies:

$0 \leq (CaO + MgO + ZnO + Na_2O + K_2O) / (ZrO_2 + Li_2O) \leq 0.10$; and/or

$0.90 \leq SiO_2 + Li_2O \leq 0.93$; and/or

$0 \leq (CaO + SrO) / ZrO_2 \leq 1.00$, optionally, $0 \leq (CaO + SrO) / ZrO_2 \leq 0.70$. By making the composition satisfy at least one of the above relational expressions, it is beneficial to further improve the structure of the glass, and it is more beneficial to prepare the chemically strengthened microcrystalline glass having a higher stress level, thereby helping to ensure the prepared chemically strengthened microcrystalline glass to have an excellent mechanical strength performance and damage resistance.

In some embodiments of the present invention, the high-lithium-content microcrystalline glass has density $\rho \geq$ 2.54 g/cm$^3$ and refractive index $\leq 1.60$. The high-lithium-content microcrystalline glass satisfying the density and the refractive index can be ensured to have relatively high intrinsic strength and excellent optical properties.

In some embodiments of the present invention, when the high-lithium-content microcrystalline glass has the thickness of 0.5 mm, b value of the high-lithium-content microcrystalline glass is $\leq 1.0$, and optionally, b value is $\leq 0.8$. The high-lithium-content microcrystalline glass satisfying the optical b value can be ensured to have relatively superior optical properties and display effect, and is suitable for use in display screens requiring high display effect.

In some embodiments of the present invention, the high-lithium-content microcrystalline glass is transparent in the visible light range, and/or when the high-lithium-content microcrystalline glass has the thickness of 0.5 mm, for light with a wavelength of 550 nm, a transmittance of the high-lithium-content microcrystalline glass is $\geq 85.00\%$, and optionally, the transmittance is $\geq 90.00\%$. The high-lithium-content microcrystalline glass satisfying the relatively high transmittance can be ensured to have relatively good light transmittance and relatively good transparency, and is suitable for use in display screens requiring high display effect.

In some embodiments of the present invention, a crystallinity of the high-lithium-content microcrystalline glass is 30.00 wt%-90.00 wt%, and optionally, the crystallinity is 50.00 wt%-90.00 wt%. A relatively high content of the microcrystalline phase is beneficial to improve the mechanical strength performance of the high-lithium-content microcrystalline glass.

In some embodiments of the present invention, in the high-lithium-content microcrystalline glass, an average crystal size is $\leq 100$ nm, optionally, the average crystal size is $\leq 50$ nm, and further optionally, the average crystal size is 15 nm-45 nm. Satisfying a relatively small average crystal size helps to ensure the high-lithium-content microcrystalline glass to have excellent optical properties.

In some embodiments of the present invention, the Young's modulus of the high-lithium-content microcrystalline glass is $\geq 100.00$ GPa, optionally, the Young's modulus of the high-lithium-content microcrystalline glass is $\geq 110.00$ GPa, and more optionally, the Young's modulus of the high-lithium-content microcrystalline glass is 114 GPa-130 GPa. Having a relatively high Young's modulus indicates that the high-lithium-content microcrystalline glass has relatively high intrinsic strength, which is beneficial to obtain a relatively high mechanical strength performance and damage resistance.

In some embodiments of the present invention, an expansion softening point of the high-lithium-content microcrystalline glass is 750 °C-820 °C. An appropriate expansion softening point facilitates 3D hot bending forming of the high-lithium-content microcrystalline glass, so as to produce 3D curved microcrystalline glass with a high strength performance.

The present invention further provides a chemically strengthened microcrystalline glass. Composition at a center of the chemically strengthened microcrystalline glass is identical to that of the high-lithium-content microcrystalline glass. The chemically strengthened microcrystalline glass includes a compression stress layer region extending from a surface of the chemically strengthened microcrystalline glass to a compression depth, and has tensile stress in an interior of the chemically strengthened microcrystalline glass.

In some embodiments of the present invention, the chemically strengthened microcrystalline glass includes a lithium disilicate crystalline phase, where the lithium disilicate crystalline phase has a higher weight percentage than other crystalline phases present in the chemically strengthened microcrystalline glass; in terms of molar percentage of oxides, a composition at the center of the chemically strengthened microcrystalline glass includes:

$SiO_2$: 41.00 mol%-69.50 mol%, $Al_2O_3$: 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and
in terms of contents of various oxides expressed by molar percentage in the composition at the center of the chemically strengthened microcrystalline glass, the composition at the center of the chemically strengthened microcrystalline glass satisfies: $0.20 \leq 2.25 \times Li_2O - 8 \times ZrO_2 - 0.2 \times CaO \leq 0.41$, optionally, $0.21 \leq 2.25 \times Li_2O - 8 \times ZrO_2 - 0.2 \times CaO \leq 0.39$.

In some embodiments of the present invention, the chemically strengthened microcrystalline glass has DOL_0 of 0.20 t-0.25 t, and optionally has DOL_0 of 0.22 t-0.25 t, where DOL_0 is depth of a compression stress layer, and t is thickness of the chemically strengthened microcrystalline glass. DOL_0 of the chemically strengthened microcrystalline glass being in the above ranges indicates that the chemically strengthened microcrystalline glass has a large depth of the compressive stress layer, which is beneficial for it to offset energy driving crack propagation, thereby ensuring it to have excellent damage resistance, such as excellent drop resistance.

In some embodiments of the present invention, the chemically strengthened microcrystalline glass has |CT_AV| of 80 MPa-200 MPa, where |CT_AV| is an absolute value of average tensile stress. Optionally, |CT_AV| is 90 MPa-200 MPa, and more optionally, |CT_AV| is 130 MPa-200 MPa. |CT_AV| of the chemically strengthened microcrystalline glass being in the above ranges indicates that the chemically strengthened microcrystalline glass has a relatively high tensile stress level, reflecting that it has a relatively high surface compressive stress level, and the relatively high surface compressive stress level can offset more remaining energy of drop, extrusion, impact or collision, further ensuring it to have excellent damage resistance.

In some embodiments of the present invention, the chemically strengthened microcrystalline glass has CT_LD of 50,000 MPa/mm-100,000 MPa/mm. CT_LD is tensile stress linear density. Optionally, CT_LD is 55,000 MPa/mm-100,000 MPa/mm; and more optionally, CT_LD is 65,000 MPa/mm-100,000 MPa/mm. CT_LD of the chemically strengthened microcrystalline glass being in the above ranges indicates that the tensile stress stored inside the chemically strengthened microcrystalline glass is relatively dense, demonstrating that the chemically strengthened microcrystalline glass has a relatively high surface compressive stress level, further ensuring it to have excellent damage resistance, such as excellent drop resistance.

In some embodiments of the present invention, the chemically strengthened microcrystalline glass has CS_50 of 150 MPa-280 MPa. CS_50 refers to a compressive stress value at a depth of 50 $\mu$m from a main surface of the chemically strengthened microcrystalline glass. Optionally, CS_50 is 160 MPa-280 MPa; and more optionally, CS_50 is 180 MPa-280 MPa. CS_50 of the chemically strengthened microcrystalline glass being in the above ranges indicates that the compressive stress of the chemically strengthened microcrystalline glass at a depth of 50 $\mu$m from the surface is high, demonstrating that the chemically strengthened microcrystalline glass has a relatively high surface compressive stress level, and the relatively high surface compressive stress level can offset more remaining energy of drop, extrusion, impact or collision, thereby ensuring it to have excellent damage resistance, such as excellent drop resistance.

In some embodiments of the present invention, an anti-sandpaper drop test is performed on the chemically strengthened microcrystalline glass with a thickness of 0.5 mm using 80-mesh sandpaper. An average anti-sandpaper drop height of the chemically strengthened microcrystalline glass is $\geq$ 1.0 m, optionally, the average anti-sandpaper drop height is $\geq$ 1.2 m, and more optionally, the average anti-sandpaper drop height is $\geq$ 1.5 m. This indicates that the chemically strengthened microcrystalline glass has excellent drop resistance.

The present invention further provides a glass device, where the glass device contains the preceding high-lithium-content microcrystalline glass or contains the preceding chemically strengthened microcrystalline glass.

The present invention further provides an electronic device, where the electronic device includes the preceding high-lithium-content microcrystalline glass or includes the preceding chemically strengthened microcrystalline glass.

Beneficial Effects are as follows.

By enabling the high-lithium-content microcrystalline glass containing the primary crystalline phase lithium disilicate to satisfy the specific composition and structure, particularly to satisfy oxide contents under specific conditions and specific oxide content relationships, the present invention not only can ensure it to be chemically strengthened at high temperatures, ensure it to have no problems of "surface cracking" and/or surface "delamination" in the high-temperature chemical strengthening process, and improve the chemical strengthening efficiency thereof, but also can ensure the chemically strengthened microcrystalline glass prepared therefrom to satisfy the high stress level (e.g., to have high CS_50, |CT_AV|, and DOL_0) and the high mechanical strength performance. Using the high-lithium-content microcrystalline glass of the present invention can produce the chemically strengthened microcrystalline glass with excellent optical properties and mechanical strength performance, which is conducive to broadening application scenarios and application fields thereof.

## BRIEF DESCRIPTION OF THE DRAWINGS

In order to more clearly illustrate technical solutions of embodiments of the present invention, drawings which need to be used in the embodiments will be briefly introduced below. It should be understood that the drawings merely show some embodiments of the present invention, and thus should not be considered as limitation to the scope. Those ordinarily skilled in the art still could obtain other relevant drawings according to these drawings, without using any inventive efforts.

FIG. 1 is a physical image of chemically strengthened microcrystalline glass of Example 1 under intense light;

FIG. 2 is a physical image of chemically strengthened microcrystalline glass of Example 2 under intense light;

FIG. 3 is a topographic image of a section of the chemically strengthened microcrystalline glass of Example 1 in a thickness direction under an optical microscope (magnified 200 times), where A points to a surface of the chemically strengthened microcrystalline glass of Example 1, and B points to interior of the chemically strengthened microcrystalline glass of Example 1;

FIG. 4 is a physical image of chemically strengthened microcrystalline glass of Comparative Example 1 under intense light irradiation, where a "surface cracking" phenomenon occurs to the chemically strengthened microcrystalline glass;

FIG. 4A is a topographic image of a section of the chemically strengthened microcrystalline glass of Comparative Example 1 in a thickness direction under the optical microscope (magnified 200 times);

FIG. 4B is a topographic image of a partial region of a main surface of the chemically strengthened microcrystalline glass of Comparative Example 1 under the optical microscope (magnified 50 times);

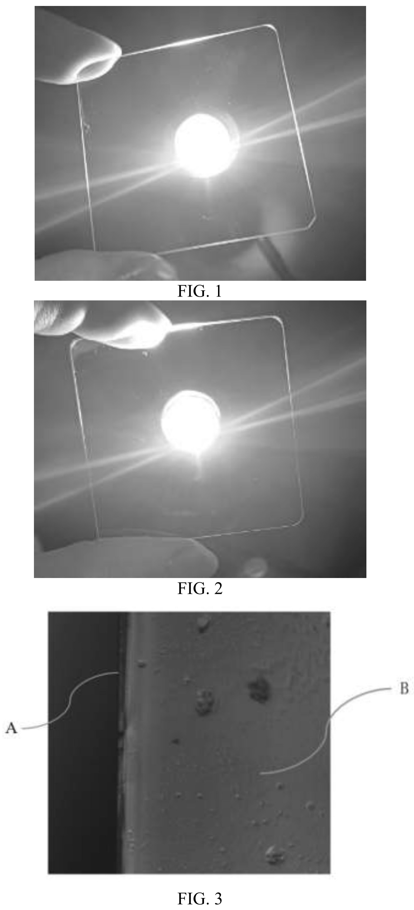

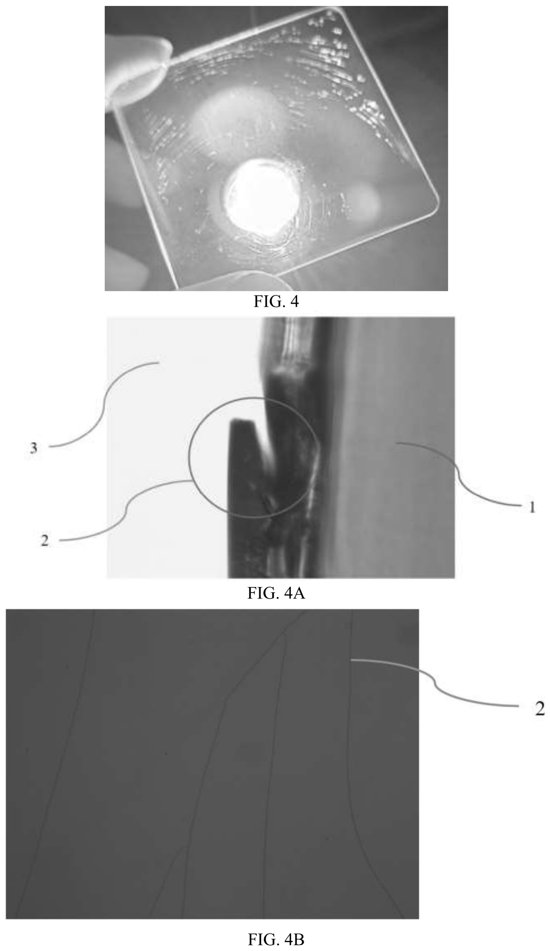

in FIG. 4A and FIG. 4B, 1 points to interior of the chemically strengthened microcrystalline glass of Comparative Example 1, 2 points to a "cracking" region on the main surface of the chemically strengthened microcrystalline glass of Comparative Example 1, and 3 points to air;

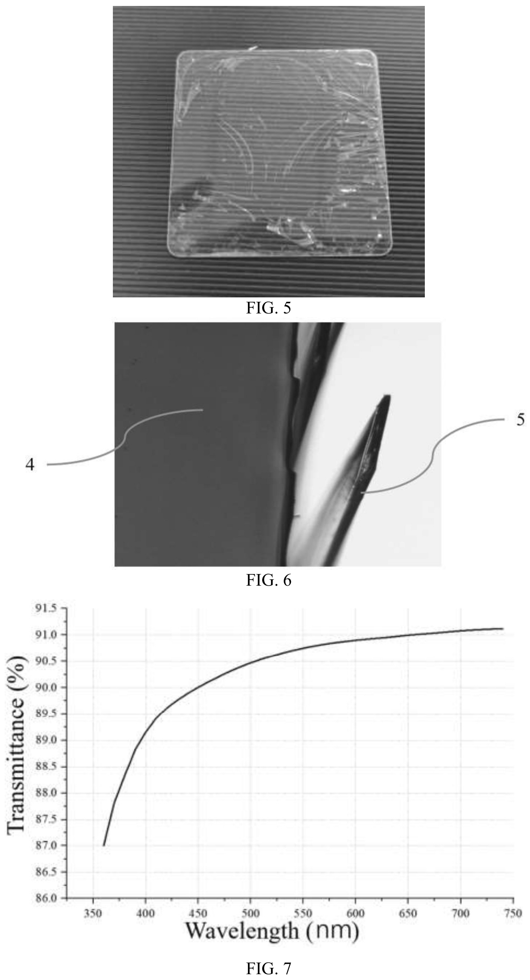

FIG. 5 is a physical image of chemically strengthened microcrystalline glass of Comparative Example 12 under natural light, where a surface "delamination" phenomenon occurs to the chemically strengthened microcrystalline glass;

FIG. 6 is a topographic image of a section of the chemically strengthened microcrystalline glass of Comparative Example 12 in a thickness direction under the optical microscope (magnified 50 times), where 4 points to interior of the chemically strengthened microcrystalline glass of Comparative Example 12, and 5 points to a surface "delamination" region of the chemically strengthened microcrystalline glass of Comparative Example 12;

FIG. 7 is a transmittance curve of high-lithium-content microcrystalline glass of Example 6 in a wavelength band of 360 nm-740 nm;

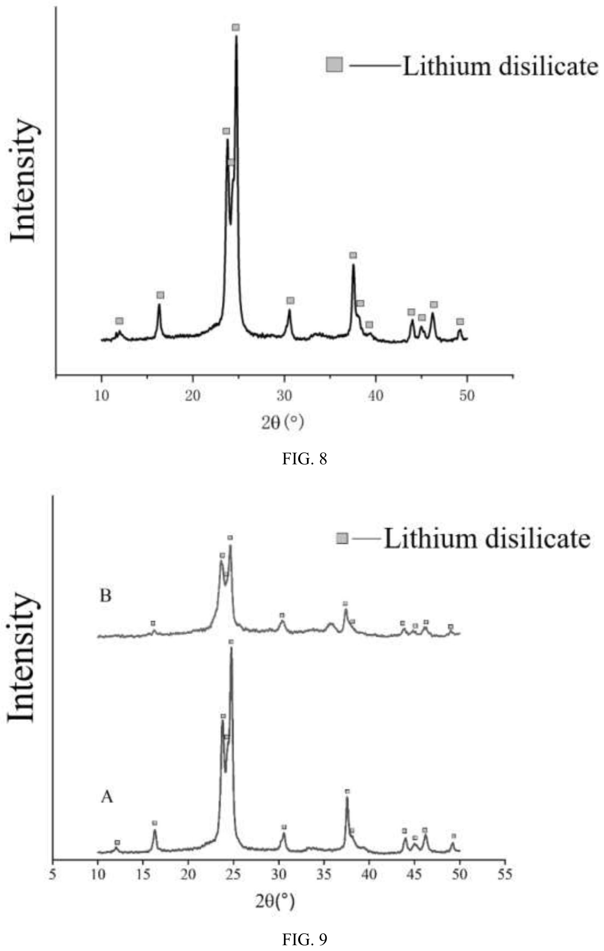

FIG. 8 is an XRD pattern of the high-lithium-content microcrystalline glass of Example 6;

FIG. 9 is an XRD pattern of the microcrystalline glass of Comparative Example 1 before and after chemical strengthening, where curve A is an XRD pattern of the microcrystalline glass of Comparative Example 1, and curve B is an XRD pattern of the chemically strengthened microcrystalline glass of Comparative Example 1;

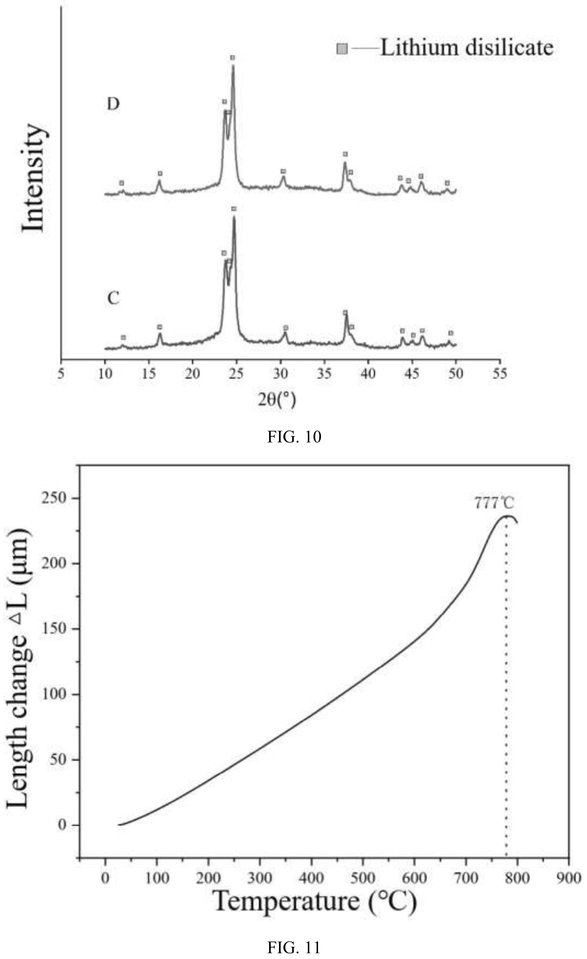

FIG. 10 is an XRD pattern of high-lithium-content microcrystalline glass of Example 4 before and after chemical strengthening, where curve C is an XRD pattern of the high-lithium-content microcrystalline glass of Example 4, and curve D is an XRD pattern of the chemically strengthened microcrystalline glass of Example 4; and

FIG. 11 is a test curve of thermal expansion coefficient of high-lithium-content microcrystalline glass of Example 8, in which temperature shown is an expansion softening point temperature of the high-lithium-content microcrystalline glass.

## DETAILED DESCRIPTION OF EMBODIMENTS

Endpoints and any value of ranges disclosed herein are not limited to precise ranges or values, and these ranges or values should be understood as encompassing values close to these ranges or values. For numerical ranges, endpoint values of various ranges can be combined with each other, endpoint values of various ranges and individual point values can be combined with each other, and individual point values can be combined with each other to obtain one or more new numerical ranges, which numerical ranges should be construed as being specifically disclosed herein. Herein, the terms "optional" and "optionally" both mean possibly including or not (or possibly being present or possibly being not present).

## Definitions of Terms and Testing Methods:

Phenomenon of "surface cracking" refers to a phenomenon of obvious cracks on a surface of chemically strengthened glass (e.g., chemically strengthened microcrystalline glass) under intense light irradiation.

Phenomenon of surface "delamination" refers to a phenomenon of skin glass delamination from a glass bulk occurring on a surface of chemically strengthened glass (e.g., chemically strengthened microcrystalline glass).

Base glass refers to glass which has not been subjected to nucleation treatment, crystallization treatment or strengthening treatment, or is also known as basic glass.

Microcrystalline glass is also known as glass-ceramic, and is a solid composite material containing both a glass phase and a crystal phase (also known as microcrystalline phase, crystallization phase) prepared by targeted controlled crystallization for base glass.

Chemically strengthened microcrystalline glass refers to a solid composite material obtained after microcrystalline glass undergoes a chemical strengthening treatment. During a high-temperature chemical strengthening treatment, alkali metal ions with a larger ionic radius (such as potassium ions or sodium ions) in a molten salt bath will replace alkali metal ions with a smaller ionic radius (such as sodium ions or lithium ions) in the microcrystalline glass, thereby generating an ion exchange volume difference and generating compressive stress (or also known as compression stress) on a surface of the microcrystalline glass.

Nucleation refers to growth of small crystal nucleuses in a nucleating substance in glass through heat treatment.

Crystallization refers to growth of a certain type of crystals on the basis of crystal nucleuses through heat treatment on glass.

Crystalline phase is a microstructure of crystallization, is a general term of constituent parts of numerous crystalline solid phases, or is also called as crystal.

Primary crystalline phase is also known as a primary crystalline phase, and refers to a crystalline phase having a higher weight content than other crystalline phases present in microcrystalline glass.

Main surface refers to a surface with the largest surface area in a glass brick or a glass sheet, such as an upper surface or a lower surface of cover glass.

Crystallinity refers to a percentage of a total mass of crystalline phases or crystals in microcrystalline glass relative to a mass of the microcrystalline glass, or is also known as a total crystalline phase content in the microcrystalline glass.

Refractive index refers to a ratio of the propagation velocity of light in vacuum to that of light in this medium.

Transmittance refers to that light of a certain wavelength irradiated onto a glass surface will be reflected, absorbed and transmitted, where a ratio of intensity of a transmitted part to intensity of incident light is transmittance.

SOC refers to photoelastic coefficient. Photoelasticity mainly refers to that a birefringence phenomenon occurs due to anisotropy after a transparent material is stressed. Through the photoelastic coefficient and birefringence measurement, a value of residual stress (in unit of MPa) inside the material can be obtained.

CT_LD refers to tensile stress linear density, in unit of MPa/mm. It should be understood that when the microcrystalline glass is subjected to ion exchange in a molten salt bath, a compression stress layer (or also known as a compressive stress layer) will be formed on a surface of the microcrystalline glass, and a tensile stress layer (or also known as a tension stress layer) will be formed inside the microcrystalline glass. Exemplarily, during chemical strengthening, ion exchange is performed between alkali metal ions with a larger radius in the molten salt bath and alkali metal ions with a smaller radius in the microcrystalline glass, thereby forming the compression stress layer on the surface of the microcrystalline glass, and forming the tensile stress layer in an interior of the microcrystalline glass. In the present invention, CT_LD is calculated through the following equation:

$$\mathrm{CT\_LD} = |\mathrm{CT\_AV}| \times \frac{(1000 \times t - 2 \times \mathrm{DOL\_0})}{t}$$

Herein, t is thickness of the chemically strengthened microcrystalline glass, in unit of mm; DOL_0 is depth of the compression stress layer of the chemically strengthened microcrystalline glass, in unit of $\mu$m; and |CT_AV| is an absolute value of an average tensile stress of the chemically strengthened microcrystalline glass, in unit of MPa. It should be understood that in the calculation equation of the tensile stress linear density, data are put according to the above unit requirements to perform calculation, and a calculation result is obtained, where the units themselves are not involved in the calculation.

CS_50 refers to a compressive stress value at a depth of 50 $\mu$m from a main surface of the chemically strengthened microcrystalline glass, in unit of MPa.

|CT_AV| refers to an absolute value of the average tensile stress, in unit of MPa, and specifically refers to an absolute value of an average value of all tensile stresses in the tensile stress layer, tested by the SLP-2000 stressmeter.

DOL_0 refers to the depth of the compression stress layer, or is known as a depth of the compressive stress layer, and specifically refers to a distance from any main surface of chemically strengthened microcrystalline glass to a position near the surface where the compressive stress is zero, tested by the SLP-2000 stressmeter.

The b value is used to characterize the yellowness-blueness value of the material. In the present invention, the optical b-value refers to the transmitted light b-value, wherein a positive optical b-value indicates a bluish tint in the material.

Upper limit temperature of crystal precipitation refers to the highest temperature at which base glass undergoes crystal precipitation, and above this temperature, the base glass will not precipitate crystals.

Thickness of glass is measured by a micrometer. It should be understood that in a thickness direction, a degree of ion exchange gradually varies from a surface to a center, while an overall exchange capacity increment (mass) of Na-K and/or Li-Na generally is not more than 1.5% of a total mass of a sample. Thus, an expansion effect in the thickness direction is extremely slight, and it can be approximately considered as that the thickness is substantially unchanged. That is, before and after chemical strengthening, the thickness of the microcrystalline glass has little and negligible change.

Measurement of size specification of glass sheet is tested by a quadratic measuring instrument (instrument model is Miyu MY-YXCL-4030).

XRD test: the high-lithium-content microcrystalline glass or the chemically strengthened microcrystalline glass of the present invention is pulverized and ground into a sample with a particle size less than 75 $\mu$m, and the sample obtained from the grinding is tested using an X-ray diffractometer, so as to obtain an XRD diffraction peak curve and XRD diffraction data. X-ray diffractometer used in the present invention is Shimadzu XRD-6100, $2\theta = 10°\text{-}50°$, a scanning speed is 6°/min, an operating voltage is 40 kV, and an operating current is 30 mA.

Determination of crystalline phases: XRD diffraction data are analyzed using Jade software (JADE Standard 8.6), so as to determine composition of the crystalline phases in a sample.

Determination of crystallinity: test result (RAW format) of XRD is imported into X-ray diffraction data Rietveld refinement software Jade for fitting and calculation, so as to determine the crystallinity of a sample. Specifically, a ratio of the fitted crystalline phase peak area to a total fitted peak area is the crystallinity of the sample.

Determination of average crystal size: using result data obtained from XRD test, the average crystal size of a sample can be calculated according to Scherrer equation $D = K\lambda / (\beta\cos\theta)$. Herein, $\lambda$ is an X-ray wavelength, $\lambda = 0.154056$ nm, $\beta$ is full width at half maximum of the diffraction peak, $K = 0.89$, and $\theta$ is a Bragg diffraction angle. Specifically, the RAW-format file output from XRD instrument is curve-fitted in Jade software, and a fitting report is output by Jade. Based on the angle $2\theta$ value and Peak FWHM value corresponding to each diffraction peak in the fitting report, the Peak FWHM value is converted to the radian system: $\beta = (\text{FWHM} / 180 \times 3.14)$, and through the Scherrer equation $D = K\lambda / (\beta\cos\theta)$, the crystal size of each diffraction peak is calculated and then averaged, so as to obtain the average crystal size of the sample.

Testing of transmittance and optical b value: the transmittance and optical b value of the high-lithium-content microcrystalline glass of the present invention are tested using a haze meter with reference to the national standard *"GB/T 7962.12-2010 Test methods of colorless optical glass - Part 12: Spectral internal transmittance"*. Specifically, the haze meter is utilized to test the transmittance and optical b value of five pieces of microcrystalline glass in the same batch at light with different wavelengths. Average value of optical b values measured for the five pieces of microcrystalline glass is recorded as a result of the optical b value of the microcrystalline glass. An average value of the transmittance measured for the five pieces of microcrystalline glass at light with a wavelength of 550 nm is recorded as a transmittance result of the microcrystalline glass at light with the wavelength of 550 nm. Herein, the haze meter used for testing in the present invention is a spectrophotometer CM-3600A from Japanese Konica Minolta, a light receiving optical system is transmission, a spectroscopic method is plane reflective grating, a wavelength range is 360 nm-740 nm, a wavelength spacing is 10 nm, an lighting source is pulsed xenon lamp ×4, and instrument is placed with an ambient temperature of 24 °C, and air humidity of 40%.

Density: in the present invention, density of the high-lithium-content microcrystalline glass is measured using electronic density balance SD-200L from ALFA MIRAGE, Japan.

Refractive index: in the present invention, a WYA-2WAJ model Abbe refractometer is used for measuring the refractive index of the high-lithium-content microcrystalline glass.

Exchange capacity refers to a ratio of a mass difference of the high-lithium-content microcrystalline glass before and after chemical strengthening to a mass of the high-lithium-content microcrystalline glass before chemical strengthening.

Expansion softening point temperature: the sample is made into a cylinder with a diameter of 5.5 mm and a length of 20 mm. A thermal dilatometer LINSEIS L75VD1000 is used for testing the sample. A test curve of thermal expansion coefficient is output by testing. When the curve starts to descend with the increase of temperature, a temperature corresponding to a starting point of the curve experiencing a descending trend is recorded as the expansion softening point temperature of the sample.

Young's modulus: the Young's modulus of the high-lithium-content microcrystalline glass is measured by a UMS-100 ultrasonic material characterization system via acoustic wave.

Upper limit temperature of crystal precipitation: base glass is crushed into small pieces, then put into an elongated quartz tank and completely filled. A temperature range is set for a gradient furnace of model JKZC-XJY01, for example, a temperature range of 1050 °C-1225 °C, and at least six temperature measurement points are taken from each temperature range in a descending order of temperature. When the gradient furnace reaches a pre-set temperature range, the elongated quartz tank with the samples placed therein is placed into the gradient furnace, making six temperature measurement points respectively corresponding to glass samples at six positions in the elongated quartz tank. After the elongated quartz tank has been held at constant temperature in the gradient furnace for 60-70 min, the elongated quartz tank is taken out. A microscope and a magnifying lens are used for observing situation of glass samples at different positions in the elongated quartz tank. If a glass sample is devitrified and fogged, the glass sample at that place is determined as precipitating crystals; if a glass sample is transparent, the glass sample at that place is determined as not precipitating crystals. A range of the upper limit temperature of crystal precipitation is between a temperature measurement point corresponding to the transparent sample and a temperature measurement point corresponding to an adjacent devitrified or fogged sample, and an average value of the two temperature measurement points is taken as the upper limit temperature of crystal precipitation. If all or none of the glass samples in the elongated quartz tank precipitate crystals in the temperature range set for the gradient furnace, the temperature range of the gradient furnace is reset, to measure the upper limit temperature of crystal precipitation of the glass samples.

Test of average anti-sandpaper drop height: among a plurality of pieces of chemically strengthened microcrystalline glass samples in the same example or the same comparative example, a value obtained by dividing a sum of measured anti-sandpaper drop heights of each sample by the number of samples measured is recorded as an average anti-sandpaper drop height of the tested chemically strengthened microcrystalline glass, which is used for characterizing drop damage resistance of the chemically strengthened microcrystalline glass. At least 10 pieces of samples are taken from each batch for testing the average anti-sandpaper drop height $\langle h \rangle n = \dfrac{1}{n} \sum_{i=1}^{n} hi$ , wherein n is the number of glass samples tested in each batch, and $hi$ is the anti-sandpaper drop height tested for a single sample.

Herein, a method for testing the anti-sandpaper drop height of a single sample includes following steps:

step 1: attaching 80-mesh sandpaper to a lower surface of a model machine of 181 g, and placing the model machine on a LVTU LT-SKDL-CD type drop tester;
step 2: placing a to-be-tested chemically strengthened microcrystalline glass sample, with length, width and thickness of 50 mm×50 mm×0.5 mm, directly below the model machine, with the chemically strengthened microcrystalline glass sample facing the sandpaper, dropping the model machine from a certain drop height to impact the chemically strengthened microcrystalline glass sample directly below the model machine; if the chemically strengthened microcrystalline glass sample does not break, increasing the drop height of the model machine according to a certain rule, and further dropping the model machine to impact the chemically strengthened microcrystalline glass sample located directly below the model machine, until the chemically strengthened microcrystalline glass sample breaks, for example, starting with the drop height of 0.4 m of the model machine, a drop impact is performed once on the sample, and if the sample does not break, the drop height of the model machine is increased by 0.1 m so as to perform the drop again, and the preceding process is repeated until the chemically strengthened microcrystalline glass sample breaks; and
step 3: recording the last drop height before the chemically strengthened microcrystalline glass sample breaks as the anti-sandpaper drop height thereof. For instance, if the drop height is increased by 0.1 m each time, when the sample breaks at a drop height of 0.5 m, the anti-sandpaper drop height of the sample is 0.4 m.

Without being bound to any theory, it is presumed that a chemical strengthening process of the microcrystalline glass generally undergoes two following steps: a first step is ion exchange occurring at an interface where the microcrystalline glass is in contact with the molten salt, and entry of ions with a larger ionic radius in the molten salt into the microcrystalline glass, and a second step is a migration process of the ions with a larger ionic radius which enter the microcrystalline glass through exchange into deeper positions of the microcrystalline glass. However, when the microcrystalline glass with a high lithium content and containing the primary crystalline phase lithium disilicate is subjected to the chemical strengthening treatment in a high-temperature salt bath (for example, a salt bath temperature is not less than 480 °C), surface ion exchange (for example, lithium ions $Li^+$ in the microcrystalline glass exchange with sodium ions $Na^+$ in the salt bath) has a relatively fast speed, and a migration rate of large-radius ions entering through the exchange will be restricted by an internal structure of the microcrystalline glass. In this case, the compression stress generated on a surface layer of the microcrystalline glass will quickly reach a bearing limit, and then it is likely to cause the phenomenon of "surface cracking" on the surface of the microcrystalline glass. The phenomenon of "surface cracking" mainly occurs on a first main surface and/or a second main surface of the microcrystalline glass, and the cracks do not penetrate through an entire depth or thickness of the microcrystalline glass.

Optionally, when the chemical strengthening treatment is performed at higher temperatures, in the microcrystalline glass with a high lithium content and containing the primary crystalline phase lithium disilicate, the first main surface or/and the second main surface is even prone to the "delamination" phenomenon, that is, an outermost layer will directly fall off from the microcrystalline glass, and a thickness of a delaminated layer usually ranges from several microns to tens of microns.

However, the phenomena of "surface cracking" or/and surface "delamination" of the microcrystalline glass occurring in the chemical strengthening process are quite harmful to the performance of the microcrystalline glass itself, not only causing surface failure of the microcrystalline glass, but also greatly reducing the mechanical strength of the microcrystalline glass, rendering it unable to meet use requirements.

In view of this, the present invention provides a high-lithium-content microcrystalline glass adapted to high-temperature chemical strengthening and having a primary crystalline phase lithium disilicate, a chemically strengthened microcrystalline glass and use thereof. The high-lithium-content microcrystalline glass, after being chemically strengthened at high temperatures, not only overcomes the problems of "surface cracking" and/or surface "delamination", but also can be used for producing the chemically strengthened microcrystalline glass with a high stress performance after high-temperature chemical strengthening. By performing the high-temperature chemical strengthening treatment on the high-lithium-content microcrystalline glass, so as to prepare the chemically strengthened microcrystalline glass having a high stress level and a high mechanical strength performance, the efficiency of preparing high-strength chemically strengthened microcrystalline glass can be greatly improved.

As mentioned in the above, some embodiments of the present invention provide the high-lithium-content microcrystalline glass, where the high-lithium-content microcrystalline glass contains a lithium disilicate crystalline phase, where the lithium disilicate crystalline phase has a higher weight percentage than other crystalline phases present in the high-lithium-content microcrystalline glass; in terms of molar percentage of oxides, a composition of the high-lithium-content microcrystalline glass includes: $SiO_2$: 41.00 mol%-69.50 mol%, $Al_2O_3$: 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and in terms of contents of various oxides represented by molar percentage in the composition of the high-lithium-content microcrystalline glass, the composition of the high-lithium-content microcrystalline glass satisfies: $0.20 \leq 2.25 \times Li_2O - 8 \times ZrO_2 - 0.2 \times CaO \leq 0.41$.

In the present invention, by optimizing glass formulations, for example, with a relatively high content of lithium, using a relatively high content of zirconium, a relatively low content of aluminum, etc., at the same time, making various constituent components satisfy specific content relationships, and enabling interaction between various constituent components, on one hand, it is beneficial to ensure precipitation of a desired content of the lithium disilicate crystalline phase, and restrict precipitation of other crystalline phases (for example, petalite crystalline phase), thereby helping to ensure to obtain the microcrystalline glass having high intrinsic strength and excellent optical properties and taking lithium disilicate as a primary crystalline phase, and on the other hand, it is conducive to ensuring the microcrystalline glass to satisfy the specific composition and structure, so as to ensure that it can be chemically strengthened at high temperatures, without the problems of "surface cracking" and/or surface "delamination" in the high-temperature chemical strengthening process, thus contributing to improving the chemical strengthening efficiency thereof, and being capable of ensuring the prepared chemically strengthened microcrystalline glass to have a high stress level (e.g., to have high CS_50, |CT_AV|, DOL_0, etc.) and a high mechanical strength performance.

In some embodiments, a value of $2.25 \times Li_2O - 8 \times ZrO_2 - 0.2 \times CaO$ may be, for example, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40 or 0.41, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $SiO_2$, as a glass-network-forming oxide, is an indispensable component in constructing a glass network structure. Appropriately increasing the content of $SiO_2$ can increase structural stability and mechanical strength of the glass. However, excessive $SiO_2$ may increase viscosity of the base glass, making it more difficult to melt the glass, thereby reducing moldability of the base glass. Therefore, the molar percentage of $SiO_2$ is controlled at 41.00 mol%-69.50 mol%, and optionally, the molar percentage of $SiO_2$ is 60.00 mol%-65.00 mol%, and more optionally, 61.00 mol%-64.00 mol%.

In some embodiments, the high-lithium-content microcrystalline glass may contain 41.00 mol%-69.50 mol%, 42.00 mol%-69.00 mol%, 50.00 mol%-68.00 mol%, 55.00 mol%-66.00 mol%, 60.00 mol%-69.00 mol%, 60.00 mol%-65.00 mol%, 61.00 mol%-69.00 mol%, 61.00 mol%-64.00 mol%, 62.00 mol%-64.00 mol%, 63.00 mol%-64.00 mol%, 61.00 mol%-63.50 mol% or 63.00 mol%-69.50 mol% of $SiO_2$. In some embodiments, the high-lithium-content microcrystalline glass may contain 41.00 mol%, 42.00 mol%, 43.00 mol%, 44.00 mol%, 45.00 mol%, 46.00 mol%, 47.00 mol%, 50.00 mol%, 53.00 mol%, 55.00 mol%, 58.00 mol%, 60.00 mol%, 61.00 mol%, 62.00 mol%, 63.00 mol%, 63.50 mol%, 64.00 mol%, 65.00 mol% or 69.50 mol% of $SiO_2$, or may contain $SiO_2$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $Al_2O_3$ is an optional component, and adding an appropriate amount of $Al_2O_3$ is beneficial to promote ion exchange in the chemical strengthening process to a certain extent. However, excessive $Al_2O_3$ will increase glass viscosity, and tend to precipitate other crystalline phases, such as petalite, thus affecting the crystalline phase structure of the microcrystalline glass. Therefore, the molar percentage of $Al_2O_3$ is controlled at 0.00 mol%-2.00 mol%.

In some embodiments, the high-lithium-content microcrystalline glass may contain 0.00 mol%-2.00 mol%, 0.00 mol%-1.60 mol%, 0.00 mol%-1.00 mol%, 0.50 mol%-1.60 mol%, 0.50 mol%-1.00 mol%, 0.00 mol%-0.50 mol%, 1.20 mol%-1.60 mol%, 0.00 mol%-1.30 mol%, 0.00 mol%-1.20 mol% or 1.00 mol%-2.00 mol% of $Al_2O_3$. In some embodiments, the high-lithium-content microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol% or 2.00 mol% of $Al_2O_3$, or may contain $Al_2O_3$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $P_2O_5$, as a nucleating agent, is an indispensable component, both too low and too high contents thereof will lead to a poor crystallization effect, to affect optical properties of the obtained microcrystalline glass, for example, reducing transparency of the microcrystalline glass. Therefore, the molar percentage of $P_2O_5$ is controlled at 1.50 mol%-3.00 mol%, optionally, 1.50 mol%-2.10 mol%.

In some embodiments, the high-lithium-content microcrystalline glass may contain 1.50 mol%-3.00 mol%, 1.60 mol%-2.80 mol%, 1.50 mol%-2.50 mol%, 1.60 mol%-2.10 mol%, 1.70 mol%-2.20 mol%, 1.50 mol%-1.60 mol%, 1.70 mol%-3.00 mol%, 1.60 mol%-2.50 mol%, 1.70 mol%-2.30 mol%, 1.80 mol%-2.00 mol%, 2.00 mol%-3.00 mol%, 1.80 mol%-1.90 mol%, 1.60 mol%-1.90 mol%, 1.70 mol%-1.90 mol%, 1.75 mol%-1.95 mol% or 1.50 mol%-2.10 mol% of $P_2O_5$. In some embodiments, the high-lithium-content microcrystalline glass may contain 1.50 mol%, 1.60 mol%, 1.70 mol%, 1.75 mol%, 1.80 mol%, 1.85 mol%, 1.95 mol%, 2.00 mol%, 2.10 mol%, 2.20 mol%, 2.30 mol%, 2.40 mol%, 2.50 mol%, 2.60 mol%, 2.80 mol% or 3.00 mol% of $P_2O_5$, or may contain $P_2O_5$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $ZrO_2$ is an intermediate oxide in glass formation, and an appropriate amount of $ZrO_2$ can improve chemical stability of the glass, enhance hardness, scratch resistance and drop resistance of the glass. Moreover, $ZrO_2$ is also typically used as a nucleating agent in the microcrystalline glass as it has a relatively great aggregation effect on the glass structure due to high cationic charge and strong field intensity. In the present invention, using a certain amount of $ZrO_2$ not only helps the microcrystalline glass to acquire higher stress after chemical strengthening, but also helps the microcrystalline glass to resist "surface cracking" in the strengthening process. However, a too high $ZrO_2$ content will cause phase separation of the glass or be detrimental to obtaining the microcrystalline glass with excellent optical properties. Therefore, the molar percentage of $ZrO_2$ is controlled at 2.00 mol%-6.00 mol%, optionally, 3.00 mol%-6.00 mol%.

In some embodiments, the high-lithium-content microcrystalline glass may contain 2.00 mol%-6.00 mol%, 2.30 mol%-5.80 mol%, 2.50 mol%-5.50 mol%, 2.80 mol%-5.30 mol%, 2.90 mol%-5.10 mol%, 3.00 mol%-5.50 mol%, 3.10 mol%-4.80 mol%, 4.80 mol%-6.00 mol%, 4.00 mol%-5.80 mol%, 3.20 mol%-5.30 mol%, 3.50 mol%-5.00 mol%, 3.50 mol%-6.00 mol%, 3.50 mol%-5.80 mol%, 4.00 mol%-5.00 mol% or 3.00 mol%-6.00 mol% of $ZrO_2$. In some embodiments, the high-lithium-content microcrystalline glass may contain 2.00 mol%, 2.30 mol%, 2.50 mol%, 2.70 mol%, 2.90 mol%, 3.00 mol%, 3.10 mol%, 3.30 mol%, 3.50 mol%, 4.00 mol%, 4.50 mol%, 5.00 mol%, 5.50 mol%, 5.80 mol% or 6.00 mol% of $ZrO_2$, or may contain $ZrO_2$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, CaO is an optional component of network-modifying oxide for glass formation, and an appropriate amount of CaO helps to reduce high-temperature viscosity of glass and increase density of glass, but excessive CaO will shorten material properties and increase brittleness of glass. In the present invention, appropriately adding a small amount of CaO helps to increase stress obtained by the microcrystalline glass after chemical strengthening, and at the same time, also to slow down a chemical strengthening rate of the microcrystalline glass. Therefore, the molar percentage of CaO is controlled at 0.00 mol%-5.00 mol%, optionally, 0.00 mol%-4.00 mol%.

In some embodiments, the high-lithium-content microcrystalline glass may contain 0.00 mol%-5.00 mol%, 0.10 mol%-4.00 mol%, 0.00 mol%-4.00 mol%, 0.50 mol%-3.80 mol%, 0.80 mol%-2.00 mol%, 0.00 mol%-1.60 mol%, 0.00 mol%-1.00 mol%, 1.50 mol%-4.00 mol%, 0.00 mol%-2.00 mol%, 1.00 mol%-4.00 mol% or 0.10 mol%-5.00 mol% of CaO. In some embodiments, the high-lithium-content microcrystalline glass may contain 0.00 mol%, 0.10 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol%, 2.00 mol%, 3.00 mol%, 4.00 mol% or 5.00 mol% of CaO, or may contain CaO in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $Li_2O$, as essential component, is a network-modifying oxide for glass formation. It not only can optimize glass viscosity and promote melting and clarification of glass melt, but also is one of main components for forming lithium disilicate crystals. Moreover, $Li_2O$ can also provide alkali metal lithium ions for ion exchange with large-radius ions in the molten salt bath, which is a critical factor affecting an attainable stress level of the chemically strengthened microcrystalline glass. However, excessive $Li_2O$ will deteriorate the optical properties of the microcrystalline glass, and is likely to generate the phenomenon of "surface cracking" in a strengthening process of the microcrystalline glass. Therefore, the molar percentage of $Li_2O$ is controlled at 27.00 mol%-32.00 mol%, optionally, at 27.00 mol%-30.00 mol%.

In some embodiments, the high-lithium-content microcrystalline glass may contain 27.00 mol%-32.00 mol%, 27.50 mol%-31.00 mol%, 27.00 mol%-30.00 mol%, 27.50 mol%-29.50 mol%, 28.00 mol%-32.00 mol%, 28.50 mol%-31.00 mol%, 29.00 mol%-30.50 mol%, 28.00 mol%-30.50 mol% or 29.50 mol%-32.00 mol% of $Li_2O$. In some embodiments, the high-lithium-content microcrystalline glass may contain 27.00 mol%, 27.50 mol%, 28.00 mol%, 28.50 mol%, 29.00 mol%, 29.50 mol%, 30.00 mol%, 30.50 mol%, 31.00 mol%, 31.50 mol% or 32.00 mol% or $Li_2O$, or may contain $Li_2O$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, MgO is an optional component, and an appropriate amount of MgO can play a role in adjusting components of glass phase in the microcrystalline glass, but excessive MgO will affect growth of crystals and a crystalline phase structure of the microcrystalline glass. Therefore, the molar percentage of MgO is controlled at 0.00 mol%-2.00 mol%.

In some embodiments, the high-lithium-content microcrystalline glass may contain 0.00 mol%-2.00 mol%, 0.00 mol%-1.60 mol%, 0.50 mol%-1.60 mol%, 0.80 mol%-1.50 mol%, 0.00 mol%-1.00 mol%, 0.00 mol%-0.50 mol%, 0.10 mol%-1.10 mol%, 0.10 mol%-1.50 mol% or 0.00 mol%-1.40 mol% of MgO. In some embodiments, the high-lithium-content microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol% or 2.00 mol% of MgO, or may contain MgO in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, ZnO, as a network intermediate, is one of optional components. An appropriate amount of ZnO may combine with free oxygen, adjust the glass structure, and may remain in the glass phase of the microcrystalline glass and increase the glass viscosity. However, excessive ZnO will affect growth of crystals, and affect a crystalline phase structure of the microcrystalline glass. Therefore, the molar percentage of ZnO is controlled at 0.00 mol%-2.00 mol%.

In some embodiments, the high-lithium-content microcrystalline glass may contain 0.00 mol%-2.00 mol%, 0.00 mol%-1.70 mol%, 0.50 mol%-1.60 mol%, 0.80 mol%-1.50 mol%, 0.00 mol%-1.00 mol%, 0.00 mol%-0.50 mol%, 0.10 mol%-1.10 mol%, 0.10 mol%-1.50 mol% or 0.00 mol%-1.40 mol% of ZnO. In some embodiments, the high-lithium-content microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol% or 2.00 mol% of ZnO, or may contain ZnO in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $Na_2O$, as an optional component, is a network-modifying oxide. An appropriate amount of $Na_2O$ can provide free oxygen, improve the glass viscosity, promote melting and clarification of glass melt, and can also regulate a chemical strengthening rate at the same time. However, excessive $Na_2O$ will not only reduce crystallinity of the microcrystalline glass, but also affect a chemical strengthening effect. Therefore, the molar percentage of $Na_2O$ is controlled at 0.00 mol%-3.00 mol%.

In some embodiments, the high-lithium-content microcrystalline glass may contain 0.00 mol%-3.00 mol%, 0.00 mol%-2.80 mol%, 0.00 mol%-1.00 mol%, 0.10 mol%-2.70 mol%, 0.50 mol%-1.60 mol%, 0.60 mol%-1.00 mol%, 2.50 mol%-3.00 mol% or 0.00 mol%-0.50 mol% of $Na_2O$. In some embodiments, the high-lithium-content microcrystalline glass may contain 0.00 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol%, 2.00 mol%, 2.50 mol% or 3.00 mol% of $Na_2O$, or may contain $Na_2O$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $K_2O$, as a glass-network-modifying oxide, is one of optional components. An approximate amount of $K_2O$ can provide free oxygen, so as to increase an oxygen-silicon ratio in the glass structure, but excessive $K_2O$ will affect the network structure of glass, and affect glass optical properties, thermal stability, chemical stability, mechanical strength and weather resistance of glass. Therefore, the molar percentage of $K_2O$ is controlled at 0.00 mol%-1.00 mol%.

In some embodiments, the high-lithium-content microcrystalline glass may contain 0.00 mol%-1.00 mol%, 0.50 mol%-1.00 mol%, 0.00 mol%-0.50 mol%, 0.85 mol%-1.00 mol% or 0.00 mol%-0.15 mol% of $K_2O$. In some embodiments, the high-lithium-content microcrystalline glass may contain 0.00 mol%, 0.15 mol%, 0.50 mol%, 0.70 mol%, 0.85 mol%, 0.95 mol% or 1.00 mol% of $K_2O$, or may contain $K_2O$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, $B_2O_3$ is an optional component, and an approximate amount of $B_2O_3$ can be used as a fluxing agent and/or softening agent to help optimize molding and hot bending effects of glass, but excessive $B_2O_3$ will cause a crystal precipitation process uncontrollable, and deteriorate the optical properties of the microcrystalline glass. Therefore, the molar percentage of $B_2O_3$ is controlled at 0.00 mol%-1.00 mol%.

In some embodiments, the high-lithium-content microcrystalline glass may contain 0.00 mol%-1.00 mol%, 0.00 mol%-0.50 mol%, 0.50 mol%-1.00 mol%, 0.10 mol%-0.85 mol%, 0.85 mol%-1.00 mol% or 0.25 mol%-0.75 mol% of $B_2O_3$. In some embodiments, the high-lithium-content microcrystalline glass may contain 0.00 mol%, 0.10 mol%, 0.25 mol%, 0.50 mol%, 0.60 mol%, 0.70 mol%, 0.75 mol%, 0.85 mol%, 0.95 mol% or 1.00 mol% of $B_2O_3$, or may contain $B_2O_3$ in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In the present invention, SrO, as an optional component, is an alkaline-earth metal oxide. An appropriate amount of SrO can play a role in adjusting a glass phase component in the microcrystalline glass, help to increase density of the microcrystalline glass, and increase the Young's modulus thereof. Moreover, it also facilitates reducing the expansion softening point of the microcrystalline glass, thereby being beneficial to produce 3D curved microcrystalline glass by hot bending the microcrystalline glass. However, excessive SrO will deteriorate the optical properties of the microcrystalline glass. Therefore, the molar percentage of SrO is controlled at 0.00 mol%-2.00 mol%.

In some embodiments, the high-lithium-content microcrystalline glass may contain 0.00 mol%-2.00 mol%, 0.10 mol%-2.00 mol%, 0.00 mol%-1.00 mol%, 0.10 mol%-1.00 mol%, 0.30 mol%-1.90 mol%, 0.40 mol%-1.20 mol%, 1.20 mol%-2.00 mol%, 0.00 mol%-0.30 mol%, 0.85 mol%-1.40 mol%, 0.85 mol%-1.90 mol%, 0.50 mol%-1.20 mol% or 1.00 mol%-2.00 mol% of SrO. In some embodiments, the high-lithium-content microcrystalline glass may contain 0.00 mol%, 0.30 mol%, 0.50 mol%, 0.70 mol%, 0.85 mol%, 0.95 mol%, 1.00 mol%, 1.10 mol%, 1.20 mol%, 1.30 mol%, 1.40 mol%, 1.50 mol%, 1.60 mol%, 1.80 mol% or 2.00 mol% of SrO, or may contain SrO in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments, in terms of molar percentage of oxides, the composition of the high-lithium-content microcrystalline glass includes: $SiO_2$: 60.00 mol%-65.00 mol%, $Al_2O_3$ 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-4.00 mol%, $B_2O_3$: 0.00 mol%-1.00 mol%, and SrO: 0.00 mol%-2.00 mol%. By enabling the microcrystalline glass to satisfy the above composition, it not only is beneficial to endow high intrinsic strength and excellent optical properties to the high-lithium-content microcrystalline glass having the primary crystalline phase lithium disilicate, but also is beneficial to ensure the chemical strengthening effect thereof, and ensure the microcrystalline glass to obtain a relatively high stress level after the chemical strengthening, and further to obtain a relatively high mechanical strength performance and damage resistance.

In some embodiments, on the basis of the above composition ranges, the composition of the high-lithium-content microcrystalline glass of the present invention can further include other components. For example, in some specific embodiments, in terms of molar percentage of oxides, the composition of the high-lithium-content microcrystalline glass further includes: $Y_2O_3$: 0.00 mol%-1.00 mol%, $La_2O_3$: 0.00 mol%-1.00 mol%, and $Ta_2O_5$: 0.00 mol%-1.00 mol%.

In the present invention, selectively adding an appropriate amount of $Y_2O_3$, $La_2O_3$ or $Ta_2O_5$ helps to increase density of the microcrystalline glass and increase the Young's modulus thereof, but may also increase the refractive index of the microcrystalline glass, so that the optical properties of the microcrystalline glass are reduced. Therefore, the molar percentage of $Y_2O_3$, $La_2O_3$ or $Ta_2O_3$ is controlled at 0.00 mol%-1.00 mol%.

In some embodiments, in the high-lithium-content microcrystalline glass, molar percentage of $Y_2O_3$, $La_2O_3$ or $Ta_2O_5$ may be 0.00 mol%, 0.10 mol%, 0.20 mol%, 0.30 mol%, 0.40 mol%, 0.50 mol%, 0.60 mol%, 0.70 mol%, 0.80 mol%, 0.85 mol%, 0.90 mol%, 0.95 mol% or 1.00 mol%, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments, in terms of molar percentage of oxides, the composition of the high-lithium-content microcrystalline glass includes: $SiO_2$: 60.00 mol%-65.00 mol%, $Al_2O_3$ 0.00 mol%-2.00 mol%, $P_2O_5$: 1.50 mol%-2.50 mol%, $ZrO_2$: 3.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.50 mol%-31.00 mol%, CaO: 0.00 mol%-2.50 mol%, $B_2O_3$: 0.00 mol%-1.00 mol%, SrO: 0.00 mol%-2.00 mol%, $Y_2O_3$: 0.00 mol%-1.00 mol%, $La_2O_3$: 0.00 mol%-1.00 mol%, and $Ta_2O_5$: 0.00 mol%-1.00 mol%. By enabling the high-lithium-content microcrystalline glass to satisfy the above composition, it is beneficial to prepare the chemically strengthened microcrystalline glass having a high stress level, thereby being conducive to ensuring the prepared chemically strengthened microcrystalline glass to have a high mechanical strength performance and excellent damage resistance.

In some embodiments of the present invention, in terms of contents of various oxides represented by molar percentage in the composition of the high-lithium-content microcrystalline glass, the composition of the high-lithium-content microcrystalline glass further satisfies: $0.25 \leq (2.2 \times ZrO_2 + 0.35 \times CaO + Na_2O) / Li_2O \leq 0.45$. By enabling the composition of the microcrystalline glass to satisfy this relational expression, it is beneficial to avoid the phenomena of "surface cracking" and/or "delamination" of the microcrystalline glass when being chemically strengthened in the high-temperature molten salt bath while ensuring the high-lithium-content microcrystalline glass to have relatively high intrinsic strength and excellent optical properties. In some embodiments, a value of $(2.2 \times ZrO_2 + 0.35 \times CaO + Na_2O) / Li_2O$ may be, for example, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44 or 0.45, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, in terms of contents of various oxides represented by molar percentage in the composition of the high-lithium-content microcrystalline glass, the composition of the high-lithium-content microcrystalline glass further satisfies: $0.00 \leq (CaO + MgO + ZnO + Na_2O + K_2O) / (ZrO_2 + Li_2O) \leq 0.15$. Using the composition and structure satisfying this relational expression is more beneficial to elevate the stress level generated by the high-lithium-content microcrystalline glass after the chemical strengthening. In some embodiments, a value of $(CaO + MgO + ZnO + Na_2O + K_2O) / (ZrO_2 + Li_2O)$ may be, for example, 0.00, 0.01, 0.02, 0.03, 0.04, 0.05, 0.06, 0.07, 0.08, 0.09, 0.10, 0.11, 0.12, 0.13, 0.14 or 0.15, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, in terms of contents of various oxides represented by molar percentage in the composition of the high-lithium-content microcrystalline glass, the composition of the high-lithium-content microcrystalline glass further satisfies: $0.90 \leq SiO_2 + Li_2O \leq 0.95$. Using the composition and structure satisfying the relational expression is beneficial to ensure precipitation of a desired content of lithium disilicate crystals from the microcrystalline glass, and effective reduction of precipitation of other crystals, such as petalite crystals, ensure the microcrystalline glass to obtain relatively high intrinsic strength and optical properties, enable the microcrystalline glass to obtain a high stress level after chemical strengthening, and at the same time, ensure the base glass to be not devitrified when preparing the microcrystalline glass through heat treatment, or ensure the base glass to be not devitrified in a melting process. In some embodiments, a value of $SiO_2 + Li_2O$ may be, for example, 0.900, 0.904, 0.905, 0.910, 0.915, 0.920, 0.925, 0.930, 0.935, 0.940, 0.945 or 0.950, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, in terms of contents of various oxides represented by molar percentage in the composition of the high-lithium-content microcrystalline glass, the composition of the high-lithium-content microcrystalline glass further satisfies: $2.00 \leq SiO_2 / Li_2O \leq 2.30$. Using the composition and structure satisfying this relational expression is beneficial to reduce a crystal size of the microcrystalline glass, and improve the optical properties of the microcrystalline glass, and at the same time, it is conducive to ensuring precipitation of the primary crystalline phase lithium disilicate crystals, effectively reducing precipitation of other crystalline phases, such as petalite crystals, enabling the microcrystalline glass to obtain relatively high intrinsic strength, and making the microcrystalline glass obtain a high stress level after chemical strengthening. In some embodiments, a value of $SiO_2/Li_2O$ may be, for example, 2.00, 2.02, 2.04, 2.06, 2.08, 2.10, 2.12, 2.14, 2.16, 2.18, 2.20, 2.22, 2.24, 2.26, 2.28 or 2.30, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, in terms of contents of various oxides represented by molar percentage in the composition of the high-lithium-content microcrystalline glass, the composition of the high-lithium-content microcrystalline glass further satisfies: $0 \leq (CaO + SrO) / ZrO_2 \leq 1.50$. Using the composition and structure satisfying this relational expression is more beneficial to elevate the stress level generated by the high-lithium-content microcrystalline glass after chemical strengthening. In some embodiments, a value of $(CaO + SrO) / ZrO_2$ may be, for example, 0.00, 0.10, 0.20, 0.30, 0.40, 0.50, 0.60, 0.70, 0.80, 0.90, 1.00, 1.20, 1.30, 1.40 or 1.50, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, in terms of contents of various oxides represented by molar percentage in the composition of the high-lithium-content microcrystalline glass, the composition of the high-lithium-content microcrystalline glass further satisfies: $0 \leq Al_2O_3 / (SiO_2 + Al_2O_3) \leq 0.03$. Using the composition and structure satisfying this relational expression is more beneficial to ensure precipitation of the primary crystalline phase lithium disilicate crystals, effectively reduce precipitation of other crystalline phases, such as petalite crystals, ensure the microcrystalline glass to obtain relatively high intrinsic strength and optical properties, and enable the microcrystalline glass to obtain a high stress level after the chemical strengthening. In some embodiments, a value of $Al_2O_3 / (SiO_2 + Al_2O_3)$ may be, for example, 0.00, 0.01, 0.020, 0.022, 0.023, 0.024, 0.025 or 0.03, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments, in terms of contents of various oxides represented by molar percentage in the composition of the high-lithium-content microcrystalline glass, the composition of the high-lithium-content microcrystalline glass satisfies:

$0 \leq (CaO + MgO + ZnO + Na_2O + K_2O) / (ZrO_2 + Li_2O) \leq 0.10$; and/or
$0.90 \leq SiO_2 + Li_2O \leq 0.93$; and/or
$0 \leq (CaO + SrO) / ZrO_2 \leq 1.00$, optionally $0 \leq (CaO + SrO) / ZrO_2 \leq 0.70$. By making the composition satisfy at least one of the above relational expressions, it is beneficial to further improve the structure of glass, and it is more beneficial to prepare the chemically strengthened microcrystalline glass having a higher stress level, thereby helping to ensure the prepared chemically strengthened microcrystalline glass to have a high mechanical strength performance and an excellent damage resistance.

The high-lithium-content microcrystalline glass of the present invention has a specific composition and structure, and can be chemically strengthened at high temperatures. When it is chemically strengthened in a high-temperature molten salt bath, the phenomena of "surface cracking" and/or "delamination" will not occur. In some embodiments of the present invention, upon treatment in a mixed salt bath at 500 °C for 1 h-5 h, there is no diffraction peak at 2θ in a range of 35.30°-35.90° in an X-ray diffraction pattern of the high-lithium-content microcrystalline glass, where the mixed salt bath includes 29.99 wt% of $NaNO_3$, 69.98 wt% of $KNO_3$ and 0.03 wt% of $LiNO_3$.

It should be noted that, "upon treatment for 1 h-5 h, there is no diffraction peak at 2θ in a range of 35.30°-35.90° in an X-ray diffraction pattern of the high-lithium-content microcrystalline glass" in the preceding means that there is no diffraction peak at 2θ in the range of 35.30°-35.90° in the X-ray diffraction pattern at any time during 1 h-5 h of treatment.

In some embodiments of the present invention, the high-lithium-content microcrystalline glass has the density $\rho \geq$ 2.54 g/cm³ and the refractive index $\leq$ 1.60. The high-lithium-content microcrystalline glass satisfying the density and the refractive index can be ensured to have relatively high intrinsic strength and excellent optical properties.

In some embodiments, the density $\rho$ of the high-lithium-content microcrystalline glass may be 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³ or 2.65 g/cm³, or may be a value no less than any of the above specific values, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments, the refractive index of the high-lithium-content microcrystalline glass may be 1.50, 1.51, 1.52, 1.53, 1.54, 1.55, 1.56, 1.57, 1.58, 1.59 or 1.60, or may be a numerical value not more than any of the above specified numerical values, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, when the high-lithium-content microcrystalline glass has the thickness of 0.5 mm, the b value of the high-lithium-content microcrystalline glass is $\leq$ 1.0, and optionally, b value is $\leq$ 0.8. The high-lithium-content microcrystalline glass satisfying the optical b value can be ensured to have relatively good optical properties and display effect, and is suitable for use in display screens requiring high display effect. In some embodiments, when the thickness is 0.5 mm, the b value of the high-lithium-content microcrystalline glass may be 0.1, 0.2, 0.3, 0.4, 0.5, 0.6, 0.7, 0.8, 0.9 or 1.0, or may be a numerical value not more than any of specific numerical values in the above, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, the high-lithium-content microcrystalline glass is transparent in the visible light range, and/or when the thickness is 0.5 mm, for light with a wavelength of 550 nm, a transmittance of the high-lithium-content microcrystalline glass is $\geq$ 85.00%, and optionally, the transmittance is $\geq$ 90.00%. The high-lithium-content microcrystalline glass satisfying the transmittance can be ensured to have relatively good light transmittance and relatively good transparency, and is suitable for use in display screens requiring high display effect. The "visible light range" herein refers to light with a wavelength band of 360 nm-740 nm.

In some embodiments, when the thickness of the high-lithium-content microcrystalline glass is 0.5 mm, for light with a wavelength of 550 nm, the transmittance of the high-lithium-content microcrystalline glass may be 85.00%, 86.00%, 87.00%, 88.00%, 89.00%, 90.00%, 90.50%, 91.00% or 92.00%, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

The high-lithium-content microcrystalline glass of the present invention has relatively high transmittance and a relatively low b value, which indicates that the high-lithium-content microcrystalline glass of the present invention has relatively optimal optical properties and good uniformity, is in a transparent state, and can satisfy application requirements of the cover glass of electronic devices.

In some embodiments of the present invention, a crystallinity of the high-lithium-content microcrystalline glass is 30.00 wt%-90.00 wt%, and optionally, the crystallinity is 50.00 wt%-90.00 wt%. "Crystallinity of microcrystalline glass" herein refers to a percentage of a content of all crystalline phases or crystals in the microcrystalline glass relative to a mass of the microcrystalline glass. A relatively high content of microcrystalline phases is beneficial to improve the mechanical strength performance of the microcrystalline glass. In some embodiments, the crystallinity of the high-lithium-content microcrystalline glass may be 30.00 wt%-90.00 wt%, 45.00 wt%-85.00 wt%, 50.00 wt%-90.00 wt%, 55.00 wt%-85.00 wt%, 60.00 wt%-85.00 wt%, 65.00 wt%-90.00 wt%, 70.00 wt%-90.00 wt% or 68.00 wt%-85.00 wt%. In some embodiments, the crystallinity of the high-lithium-content microcrystalline glass may be 30.00 wt%, 35.00 wt%, 40.00 wt%, 45.00 wt%, 50.00 wt%, 55.00 wt%, 60.00 wt%, 65.00 wt%, 70.00 wt%, 75.00 wt%, 80.00 wt %, 85.00 wt % or 90.00 wt %, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, "the primary crystalline phase is lithium disilicate", "the lithium disilicate crystalline phase has a higher weight percentage than other crystalline phases present in the high-lithium-content microcrystalline glass" or like expressions means that the lithium disilicate crystalline phase accounts for more than 70 weight percentage (wt%) of all crystalline phases of the microcrystalline glass according to embodiments of the present invention.

In some embodiments of the present invention, non-limiting examples of other potential crystalline phases in the high-lithium-content microcrystalline glass include: a petalite crystalline phase, and/or a lithium phosphate crystalline phase. In some embodiments, the high-lithium-content microcrystalline glass further contains the petalite crystalline phase. Optionally, the petalite crystalline phase accounts for $\leq 20\%$ of the microcrystalline glass in weight percentage, and more optionally, the petalite crystalline phase may account for $\leq 15\%$, $\leq 10\%$, or $\leq 5\%$ of the microcrystalline glass in weight percentage.

In some embodiments of the present invention, in the high-lithium-content microcrystalline glass, the average crystal size is $\leq 100$ nm, optionally, the average crystal size is $\leq 50$ nm, and more optionally, the average crystal size is 15 nm-45 nm. Satisfying a relatively small average crystal size facilitates ensuring excellent optical properties of the microcrystalline glass. In some embodiments, the average crystal size may be 10 nm-100 nm, 20 nm-90 nm, 30 nm-80 nm, 40 nm-60 nm, 10 nm-30 nm, 10 nm-20 nm, 5 nm-35 nm or 15 nm-35 nm. In some embodiments, the average crystal size may be 10 nm, 15 nm, 20 nm, 30 nm, 40 nm, 45 nm, 50 nm, 60 nm, 70 nm, 80 nm, 90 nm or 100 nm, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, the upper limit temperature of crystal precipitation of the base glass corresponding to the high-lithium-content microcrystalline glass is 1,000 °C-1,100 °C. Satisfying this range of upper limit temperature of crystal precipitation is beneficial to realize industrial mass production of the high-lithium-content microcrystalline glass.

In some embodiments of the present invention, the Young's modulus of the high-lithium-content microcrystalline glass is $\geq 100.00$ GPa, optionally, the Young's modulus of the high-lithium-content microcrystalline glass is $\geq 110.00$ GPa, and more optionally, the Young's modulus of the high-lithium-content microcrystalline glass is 114 GPa-130 GPa. Having a relatively high Young's modulus indicates that the high-lithium-content microcrystalline glass has relatively high intrinsic strength, which is beneficial for it to obtain a relatively high mechanical strength performance. In some embodiments, the Young's modulus of the high-lithium-content microcrystalline glass may be 100.00 GPa-150.00 GPa, 105.00 GPa-140.00 GPa, 110.00 GPa-130.00 GPa or 114.00 GPa-125.00 GPa. In some embodiments, the Young's modulus of the high-lithium-content microcrystalline glass may be 100.00 GPa, 105.00 GPa, 110.00 GPa, 114 GPa, 115.00 GPa, 120.00 GPa, 125.00 GPa, 130.00 GPa, 140.00 GPa or 150.00 GPa, or may be a numerical value in a numerical range constituted by any two specific numerical values in the above as endpoints, as long as the high-lithium-content microcrystalline glass or the chemically strengthened microcrystalline glass with desired performance in the present invention can be obtained. It should be understood that in specific embodiments, any of the above ranges can be combined with any other ranges, as long as the high-lithium-content microcrystalline glass or the chemically strengthened microcrystalline glass with desired performance in the present invention can be obtained.

In some embodiments of the present invention, the expansion softening point of the high-lithium-content microcrystalline glass is 750 °C-820 °C. An appropriate expansion softening point facilitates 3D hot bending forming of the high-lithium-content microcrystalline glass, so as to produce 3D curved microcrystalline glass with a high strength performance. In some embodiments, the expansion softening point of the high-lithium-content microcrystalline glass may be 750 °C, 760 °C, 770 °C, 780 °C, 790 °C, 800 °C, 810 °C or 820 °C, or may be a numerical value in a numerical range constituted by any two specific numerical values in the above as endpoints, as long as the high-lithium-content microcrystalline glass with desired performance in the present invention can be obtained. It should be understood that in specific embodiments, any of the above ranges can be combined with any other ranges, as long as the high-lithium-content microcrystalline glass with desired performance in the present invention can be obtained.

In the present invention, upon a hot bending treatment on the high-lithium-content microcrystalline glass, the 3D curved microcrystalline glass can be prepared. In terms of molar percentage of oxides, the composition of the 3D curved microcrystalline glass is identical or substantially identical to that of the high-lithium-content microcrystalline glass.

The high-lithium-content microcrystalline glass of the present invention can be prepared from base glass through heat treatment, and in terms of molar percentage of oxides, the composition of the base glass used is identical or substantially identical to that of the high-lithium-content microcrystalline glass.

In the present invention, the base glass can be prepared by forming methods in the prior art, which is not limited in any way in the present invention. For example, the forming methods may include but are not limited to floating, overflowing, calendering, casting, or the like. Exemplarily, various raw materials and a fining agent can be mixed uniformly (uniformity is not less than 98%), and annealed after melting and forming to yield the base glass. Optionally, process parameters may include: a melting temperature of 1,480 °C-1,680 °C, an annealing temperature of 450 °C-650 °C, and holding at the annealing temperature for 10 h-48 h. Optionally, the fining agent may include, but is not limited to, one or more of sodium chloride, tin oxide, antimony oxide, arsenic oxide, etc., and the fining agent can be added in an amount of 0-1 wt% of a total amount of various raw materials.

In the present invention, when the heat treatment is performed on the base glass to prepare the high-lithium-content microcrystalline glass, the heat treatment can be performed, for example, in an annealing furnace, and a method of the heat treatment may include, but is not limited to, a one-step heat treatment, a two-step heat treatment or a multi-step heat treatment. For example, it may include the two-step heat treatment involving a nucleation treatment followed by a crystallization treatment. Process conditions of the heat treatment may include, but are not limited to: a nucleation temperature may be 500 °C-600 °C, and a nucleation isothermal duration may be 120 min-360 min; a crystallization temperature may be 600 °C-800 °C, a crystallization isothermal duration may be 60 min-180 min; a heating rate in a whole process may be 5 °C/min-20 °C/min; and a cooling rate may be 0.1 °C/min-3 °C/min. After the heat treatment, those skilled in the art could further perform other conventional steps so as to obtain a high-lithium-content microcrystalline glass sample meeting demanded specification or required requirements, for example, steps such as cutting treatment, CNC (computer numerical control) machining treatment or polishing treatment can be performed.

The present invention further provides a chemically strengthened microcrystalline glass, where composition at a center of the chemically strengthened microcrystalline glass is identical to that of the preceding high-lithium-content microcrystalline glass, and the chemically strengthened microcrystalline glass includes a compression stress layer region extending from a surface of the chemically strengthened microcrystalline glass to a compression depth, and has tensile stress in the interior of the chemically strengthened microcrystalline glass.

It should be understood that compared with the microcrystalline glass before chemical strengthening, after the chemical strengthening is performed, the composition on a surface of a microcrystalline glass article may be different from that of the microcrystalline glass before the chemical strengthening (not undergoing an ion exchange process). This is because that during the chemical strengthening, in freshly formed microcrystalline glass (microcrystalline glass before the chemical strengthening), one type of alkali metal ions (e.g., $Li^+$ or $Na^+$) on the surface of the microcrystalline glass will be replaced by relatively larger alkali metal ions (e.g., $Na^+$ or $K^+$). However, in embodiments, the glass composition and phase set at or near a depth enter of the microcrystalline glass article will still have the composition and phase set of the freshly formed microcrystalline glass. That is to say, in the present invention, the composition and phase set at the center or in the tensile stress layer of the chemically strengthened microcrystalline glass prepared by chemically strengthening treatment are identical or substantially identical to those of the freshly formed high-lithium-content microcrystalline glass.

In the present invention, the chemically strengthened microcrystalline glass contains a lithium disilicate crystalline phase, where the lithium disilicate crystalline phase has a higher weight percentage than other crystalline phases present in the chemically strengthened microcrystalline glass; in terms of molar percentage of oxides, a composition of the center of the chemically strengthened microcrystalline glass includes: $SiO_2$: 41.00 mol%-69.50 mol%, $Al_2O_3$: 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and in terms of contents of various oxides represented by molar percentage in the composition at the center of the chemically strengthened microcrystalline glass, the composition at the center of the chemically strengthened microcrystalline glass satisfies: $0.20 \leq 2.25 \times Li_2O - 8 \times ZrO_2 - 0.2 \times CaO \leq 0.41$, optionally, $0.21 \leq 2.25 \times Li_2O - 8 \times ZrO_2 - 0.2 \times CaO \leq 0.39$.

In some embodiments of the present invention, the chemically strengthened microcrystalline glass has DOL_0 of 0.20 t-0.25 t, where DOL_0 is depth of the compression stress layer, and t is thickness of the chemically strengthened microcrystalline glass. In some embodiments, the depth DOL_0 of the compression stress layer of the chemically strengthened microcrystalline glass may be 0.20 t-0.25 t, 0.21 t-0.24 t, 0.21 t-0.25 t or 0.22 t-0.25 t. Exemplarily, when the thickness of the chemically strengthened microcrystalline glass is 0.5 mm, DOL_0 of the chemically strengthened microcrystalline glass may be 0.100 mm, 0.105 mm, 0.110 mm, 0.112 mm, 0.113 mm, 0.114 mm, 0.115 mm, 0.116 mm, 0.117 mm, 0.118 mm, 0.119 mm, 0.120 mm, 0.121 mm, 0.122 mm, 0.123 mm, 0.124 mm or 0.125 mm, or may be a numerical value in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. DOL_0 of the chemically strengthened microcrystalline glass being in the above ranges indicates that the chemically strengthened microcrystalline glass has a large depth of the compression stress layer, which is more beneficial for it to offset energy driving crack propagation, thereby ensuring it to have excellent damage resistance, such as excellent drop resistance.

In some embodiments of the present invention, the chemically strengthened microcrystalline glass has |CT_AV| of 80 MPa-200 MPa, where |CT_AV| is an absolute value of the average tensile stress. Optionally, |CT_AV| is 90 MPa-200 MPa. In some embodiments, the chemically strengthened microcrystalline glass has |CT_AV| of 80 MPa-200 MPa, 90 MPa-200 MPa, 90 MPa-180 MPa, 100 MPa-150 MPa, 130 MPa-180 MPa, 80 MPa-100 MPa, 85 MPa-120 MPa, 90 MPa-150 MPa, 95 MPa-180 MPa, 100 MPa-140 MPa or 120 MPa-140 MPa. In some embodiments, the chemically strengthened microcrystalline glass has |CT_AV| of 80 MPa, 90 MPa, 100 MPa, 110 MPa, 120 MPa, 130 MPa, 140 MPa, 150 MPa, 160 MPa, 170 MPa, 180 MPa, 190 MPa or 200 MPa, or has |CT_AV| in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. |CT_AV| of the chemically strengthened microcrystalline glass being in the above ranges indicates that the chemically strengthened microcrystalline glass has a relatively high tensile stress level, reflecting that it has a relatively high surface stress level, and the relatively high surface compressive stress level can offset more remaining energy of drop, extrusion, impact or collision, further ensuring it to have excellent damage resistance.

In some embodiments of the present invention, the chemically strengthened microcrystalline glass has CT_LD of 50,000 MPa/mm-100,000 MPa/mm, where CT_LD is tensile stress linear density. Optionally, CT_LD is 55,000 MPa/mm-100,000 MPa/mm. In some embodiments, the chemically strengthened microcrystalline glass has CT_LD of 50,000 MPa/mm-100,000 MPa/mm, 55,000 MPa/mm-95,000 MPa/mm, 60,000 MPa/mm-90,000 MPa/mm, 65,000 MPa/mm-85,000 MPa/mm, 70,000 MPa/mm-80,000 MPa/mm, 65,000 MPa/mm-100,000 MPa/mm, 60,000 MPa/mm-80,000 MPa/mm or 60,000 MPa/mm-100,000 MPa/mm. In some embodiments, the chemically strengthened microcrystalline glass has CT_LD of 50,000 MPa/mm, 55,000 MPa/mm, 60,000 MPa/mm, 65,000 MPa/mm, 70,000 MPa/mm, 75,000 MPa/mm, 80,000 MPa/mm, 85,000 MPa/mm, 90,000 MPa/mm, 95,000 MPa/mm or 100,000 MPa/mm, or has CT_LD in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. CT_LD of the chemically strengthened microcrystalline glass being in the above ranges indicates that the tensile stress stored inside the chemically strengthened microcrystalline glass is relatively dense, demonstrating that the chemically strengthened microcrystalline glass has a relatively high surface stress level, further ensuring it to have excellent damage resistance, such as excellent drop resistance.

In some embodiments of the present invention, the chemically strengthened microcrystalline glass has CS_50 of 150 MPa-280 MPa, where CS_50 refers to a compressive stress value at a depth of 50 $\mu$m from a main surface of the chemically strengthened microcrystalline glass. Optionally, CS_50 is 160 MPa-280 MPa. In some embodiments, the chemically strengthened microcrystalline glass has CS_50 of 150 MPa-280 MPa, 160 MPa-270 MPa, 165 MPa-265 MPa, 170 MPa-260 MPa, 180 MPa-280 MPa, 165 MPa-250 MPa or 180 MPa-200 MPa. In some embodiments, the chemically strengthened microcrystalline glass has CS_50 of 150 MPa, 160 MPa, 170 MPa, 180 MPa, 190 MPa, 200 MPa, 210 MPa, 220 MPa, 230 MPa, 240 MPa, 250 MPa, 260 MPa, 270 MPa or 280 MPa, or has CS_50 in a numerical range constituted by any two specific numerical values in the above as endpoints, as long as the chemically strengthened microcrystalline glass with desired performance in the present invention can be obtained. It should be understood that in specific embodiments, any of the above ranges can be combined with any other ranges, as long as the chemically strengthened microcrystalline glass with desired performance in the present invention can be obtained. CS_50 of the chemically strengthened microcrystalline glass being in the above ranges indicates that the compressive stress of the chemically strengthened microcrystalline glass at a depth of 50 $\mu$m from the surface is high, demonstrating that the chemically strengthened microcrystalline glass has a relatively high surface stress level, and the relatively high surface compressive stress level can offset more remaining energy of drop, extrusion, impact or collision, thereby ensuring it to have excellent damage resistance, such as excellent drop resistance.

In the present invention, by enabling the chemically strengthened microcrystalline glass to satisfy specific stress characteristics, the chemically strengthened microcrystalline glass can be ensured to have an excellent physical strength performance, an excellent mechanical strength performance and excellent damage resistance, particularly, excellent drop damage resistance.

In some embodiments of the present invention, an anti-sandpaper drop test is performed on the chemically strengthened microcrystalline glass with a thickness of 0.5 mm using 80-mesh sandpaper. An average anti-sandpaper drop height of the chemically strengthened microcrystalline glass is ≥ 1.0 m, optionally, the average anti-sandpaper drop height is ≥ 1.2 m, and more optionally, the average anti-sandpaper drop height is ≥ 1.5 m. This indicates that the chemically strengthened microcrystalline glass of the present invention has excellent drop resistance. In some embodiments, the anti-sandpaper drop test is performed on the chemically strengthened microcrystalline glass with the thickness of 0.5 mm using 80-mesh sandpaper, where the average anti-sandpaper drop height of the chemically strengthened microcrystalline glass may be 1.0 m, 1.1 m, 1.2 m, 1.3 m, 1.4 m, 1.5 m, 1.6 m, 1.7 m, 1.8 m, 1.9 m, 2.0 m or 2.1 m, among others.

The chemically strengthened microcrystalline glass of the present invention can be obtained by performing a chemical strengthening treatment on the preceding high-lithium-content microcrystalline glass. A chemical strengthening process can be carried out with reference to processes in the prior art, as long as the chemically strengthened microcrystalline glass with desired performance in the present invention can be obtained. For example, it may include: firstly, heating a molten salt containing a certain sodium ion concentration to a temperature required for the chemical strengthening, then, preheating the high-lithium-content microcrystalline glass (during the preheating, a heating rate of 5 °C/min-100 °C/min can be used, for example) to a required chemical strengthening temperature, and then placing the same into the molten salt, performing treatment at a constant temperature for a duration required by the chemical strengthening, taking out the same, cooling to a room temperature, washing off salt remaining on a surface, and drying to obtain the chemically strengthened microcrystalline glass having a high stress level.

In some embodiments of the present invention, a temperature of a molten salt bath used for the chemical strengthening treatment may be 400 °C-530 °C, and the duration of the chemical strengthening treatment may be 0.5 h-24 h, as long as the chemically strengthened microcrystalline glass with desired performance in the present invention can be obtained. In some embodiments of the present invention, in terms of mass ratio, ingredients of the molten salt include 4.8 wt%-100 wt% of a sodium salt, 0-95 wt% of a potassium salt and 0-0.2 wt% of a lithium salt. Optionally, selected sodium salt, potassium salt, and lithium salt each independently can be nitrate, sulfate, phosphate or carbonate, or the like, as long as the chemically strengthened microcrystalline glass with desired performance in the present invention can be obtained. In some embodiments, when cooling the chemically strengthened microcrystalline glass after completion of the chemical strengthening treatment, the cooling rate may be 1 °C/min-50 °C/min. The high-lithium-content microcrystalline glass or the chemically strengthened microcrystalline glass having an excellent performance provided by the present invention can be used for electronic devices, including, but not limited to, mobile phones, tablet computers, handheld game consoles, portable digital devices (such as digital cameras), vehicle-mounted dashboards, electronic whiteboard glass, and intelligent home, can also be used in vehicles, aerocrafts or aircrafts, and can also be used in any glass device requiring microcrystalline glass. For example, they can be used for display screens, cover glass, touch screens, inner glass screens, inner frames, or the like of electronic devices. For example, they can be used for windshields of vehicles, aerocrafts or aircrafts, such as front windshields or side windshields. For example, they can be used for countertops, other surfaces, appliance doors, floor tiles, wall panels, storage containers, etc. Other surfaces may include, but are not limited to, exterior wall surfaces, stair tread surfaces, pillar facings or counter surfaces, etc. Storage containers may include, but are not limited to, cups, plates, vials, beverage bottles, or the like.

Examples of the present invention described in detail below are illustrative, merely used for explaining the present invention, but should not be construed as limitation to the present invention.

S in example numbers in following tables refers to example, for example, S1 refers to Example 1; D refers to comparative example, for example, D1 refers to Comparative Example 1.

Example 1

(1) Preparation of Base glass:

Raw materials of a total mass of 1,000 g were prepared (the raw materials were prepared according to a formulation of S1 in Table 1, and proportions of various oxides are as listed in Table 2). 5 g of sodium chloride was added to the prepared raw materials. Mixture was mixed in a V-type mixer at a rotational speed of 25 r/min for 30 min, and melted in a platinum crucible at 1,650 °C for 5 h. Afterwards, resultant was poured into a mold to be formed into a glass brick, which was cooled to 900 °C, then annealed in a 460 °C annealing furnace for 12 h, followed by cooling with furnace to a room temperature, so as to yield a base glass brick.

(2) Preparation of high-lithium-content microcrystalline glass: the base glass brick was put in the annealing furnace, heated from the room temperature to 525 °C at a heating rate of 10 °C/min, subjected to a nucleation treatment for 240 min while being held at this temperature, then heated to 685 °C at the heating rate of 10 °C/min, subjected to a crystallization treatment for 60 min while being held at this temperature, and then cooled to the room temperature at a cooling rate of 1 °C/min, so as to obtain a high-lithium-content microcrystalline glass sample brick. In terms of molar percentage of oxides, composition of the fabricated high-lithium-content microcrystalline glass was identical to that of the base glass, as detailed in Table 1-Table 2.

The high-lithium-content microcrystalline glass sample brick obtained was subjected to cold-working treatments of cutting, CNC machining (CNC instrument model used in the present invention being RCG500S), and polishing in sequence, to obtain high-lithium-content microcrystalline glass samples meeting demanded specification and requirements. In the present invention, the high-lithium-content microcrystalline glass sample brick was subjected to the preceding cold-working treatments to fabricate the high-lithium-content microcrystalline glass samples with a thickness of 0.50 mm. Specifically, microcrystalline glass polished sheet samples of 50 mm × 50 mm × 0.50 mm were fabricated.

The high-lithium-content microcrystalline glass samples obtained in S1 were tested.

Primary crystalline phase composition, crystallinity, average crystal size, density, refractive index, and Young's modulus of the high-lithium-content microcrystalline glass samples and optical b value and transmittance (under light with a wavelength of 550 nm) of the high-lithium-content microcrystalline glass samples with the thickness of 0.5 mm were respectively tested, and results are respectively listed in Table 3.

(3) Preparation of chemically strengthened microcrystalline glass: obtained high-lithium-content microcrystalline glass samples were preheated in a strengthening furnace cavity for 5 min. Preheated samples were quickly put into a 500 °C molten salt to undergo chemical strengthening, where composition of the molten salt included 29.99 wt% $NaNO_3$ + 69.98 wt% $KNO_3$ + 0.03 wt% $LiNO_3$. After 4.75 h of the chemical strengthening, the glass samples were taken out, slowly cooled on a strengthening furnace body to the room temperature, and then washed off salt wrapped on a glass surface with clear water, followed by drying the glass samples, so as to obtain the chemically strengthened microcrystalline glass.

The chemically strengthened microcrystalline glass obtained in S1 was tested.

I. Determining whether the chemically strengthened microcrystalline glass has "surface cracking": the glass surface was irradiated with 500-2,000 lumens of lamp light, as shown in FIG. 4, if bright seams were observed, then it was indicated that the chemically strengthened microcrystalline glass had "surface cracking"; or numerous irregular cracks were observed on the surface of the chemically strengthened microcrystalline glass under an optical microscope, as shown in FIG. 4B, it can also be indicated that the chemically strengthened microcrystalline glass had "surface cracking", and was recorded as "surface cracking" in appearance. If the preceding bright seams and irregular cracks did not exist on the glass surface, it is indicated that the chemically strengthened microcrystalline glass did not have "surface cracking" in appearance, and was recorded as "good". An effect of the chemically strengthened microcrystalline glass of the present example under intense light irradiation is as shown in FIG. 1, and a topographic image of a section of the chemically strengthened microcrystalline glass in the thickness direction under the optical microscope (magnified 200 times) is as shown in FIG. 3. It can be known that the preceding bright seams did not exist, and there was no irregular crack in the interior and surface of the glass. Appearance results thereof are recorded and listed in Table 4.

II. If the chemically strengthened microcrystalline glass did not have "surface cracking" on the surface, CS_50, DOL_0, and |CT_AV| of the chemically strengthened microcrystalline glass were tested by an SLP 2000 stressmeter (employing a light source wavelength of 518 nm, SOC = 25.5 (nm/cm)/MPa, setting the refractive index according to a refractive index value of the microcrystalline glass, the refractive index of the high-lithium-content microcrystalline glass of S1 being 1.5600, and exposure duration being 300 μsec); and then a value of the tensile stress linear density (CT_LD) was calculated, with results as listed in Table 4.

III. An average anti-sandpaper drop height of the chemically strengthened microcrystalline glass was tested, and results are listed in Table 4.

Example 2-Example 14

They were respectively carried out with reference to Example 1, and different raw material compositions, different process parameters and corresponding test results of various examples are as listed in Table 1 to Table 4, respectively.

Herein, an effect of chemically strengthened microcrystalline glass of Example 2 under intense light irradiation is as shown in FIG. 2, where there was no bright seam, and appearance quality was good.

Comparison of XRD patterns of high-lithium-content microcrystalline glass of Example 4 and chemically strengthened microcrystalline glass prepared from the high-lithium-content microcrystalline glass is as shown in FIG. 10. It can be seen that the XRD patterns had no obvious difference before and after the chemical strengthening treatment on the high-lithium-content microcrystalline glass of Example 4.

In Example 6, transmittance of obtained high-lithium-content microcrystalline glass in a wavelength band of 360 nm-740 nm is as shown in FIG. 7, and an X-ray diffraction pattern (i.e., XRD pattern) of the high-lithium-content microcrystalline glass is as shown in FIG. 8. It can be seen that the primary crystalline phase of the high-lithium-content microcrystalline glass was lithium disilicate crystalline phase, and it was transparent in the visible light range and had high transmittance.

In Example 8, a test curve of thermal expansion coefficient of obtained high-lithium-content microcrystalline glass is as shown in FIG. 11, and it can be seen that an expansion softening point temperature of the high-lithium-content microcrystalline glass was 777 °C, indicating that the high-lithium-content microcrystalline glass is easier to undergo 3D hot bending forming.

Comparative Example 1-Comparative Example 15

They were respectively carried out with reference to Example 1, and different raw material compositions, different process parameters and corresponding test results of various comparative examples are listed in Table 5 to Table 8, respectively.

Herein, comparison of XRD patterns of microcrystalline glass before and after chemical strengthening in Comparative Example 1 is as shown in FIG. 9. It can be seen that after the microcrystalline glass in Comparative Example 1 was chemically strengthened in a high-temperature salt bath to fabricate the chemically strengthened microcrystalline glass, the structure was obviously changed, specifically reflected in that at 2θ in the range of 35.30°-35.90°, the microcrystalline glass had no diffraction peak before being chemically strengthened, but the chemically strengthened microcrystalline glass prepared therefrom had a diffraction peak. An effect of the chemically strengthened microcrystalline glass of Comparative Example 1 under intense light irradiation is as shown in FIG. 4, and effects under the optical microscope are as shown in FIG. 4A and FIG. 4B. It can be seen that after being chemically strengthened in the high-temperature salt bath, the microcrystalline glass in Comparative Example 1 had the problem of "surface cracking", that is, the surface of the prepared chemically strengthened microcrystalline glass had numerous "cracks".

A "delamination" phenomenon occurred to a surface of chemically strengthened microcrystalline glass of Comparative Example 12, an effect is as shown in FIG. 5, and an effect thereof under the optical microscope is as shown in FIG. 6, from which it can be seen that "delamination" occurred to the surface thereof.

All the chemically strengthened microcrystalline glasses of Comparative Example 1-Comparative Example 11 had the phenomenon of "surface cracking", and the "delamination" phenomenon occurred to the surface of the chemically strengthened microcrystalline glass of Comparative Example 12. Such chemically strengthened microcrystalline glass obviously did not meet use requirements, and thus was not tested or calculated for stress distribution data and exchange capacity. Microcrystalline glass prepared in Comparative Example 13 had a devitrification problem (that is, its transmittance at 550 nm was lower than 85%), and thus was not subsequently tested or chemically strengthened.

Test for upper limit temperature of crystal precipitation: in order to analyze industrial mass production of the high-lithium-content microcrystalline glass of the present invention, the upper limit temperatures of crystal precipitation of the base glass in some examples were tested, where the upper limit temperature of crystal precipitation of the base glass in S3 was 1067.2 °C, and the upper limit temperature of crystal precipitation of the base glass in S4 was 1053.5 °C, both lower than 1100 °C, and the upper limit temperatures of crystal precipitation were 1000 °C-1100 °C, indicating that the high-lithium-content microcrystalline glass of the present invention is beneficial for industrial mass production.

Test for expansion softening point: in order to analyze the 3D hot bending effect of the high-lithium-content microcrystalline glass of the present invention, test curves of thermal expansion coefficients of the high-lithium-content microcrystalline glasses in some examples were tested, and the expansion softening points were obtained, as detailed in Table 3. It can be seen from the test results that the expansion softening points of the high-lithium-content microcrystalline glass of the present invention were all lower than 820 °C, being 750 °C-820 °C, indicating that the high-lithium-content microcrystalline glass of the present invention is adapted to 3D hot bending forming to prepare the 3D curved microcrystalline glass.

Table 1

| Component (mol%) | S1 | S2 | S3 | S4 | S5 | S6 | S7 | S8 | S9 | S10 | S11 | S12 | S13 | S14 |
|---|---|---|---|---|---|---|---|---|---|---|---|---|---|---|
| $SiO_2$ | 62.55 | 62.58 | 61.82 | 61.72 | 61.87 | 61.76 | 62.59 | 61.15 | 61.25 | 61.06 | 63.17 | 62.01 | 61.72 | 61.15 |
| $Al_2O_3$ | 1.55 | 0 | 1.4 | 1.38 | 1.41 | 1.4 | 1.4 | 1.37 | 1.39 | 1.38 | 0 | 1.39 | 1.38 | 1.37 |
| $P_2O_5$ | 2.06 | 1.87 | 1.86 | 1.85 | 1.88 | 1.86 | 1.87 | 1.83 | 1.85 | 1.85 | 1.89 | 1.85 | 1.85 | 1.83 |
| $ZrO_2$ | 2.58 | 4.68 | 4.66 | 4.61 | 3.16 | 3.72 | 4.21 | 4.57 | 5.1 | 5.54 | 4.72 | 4.63 | 4.61 | 4.57 |
| $MgO$ | 0 | 1.34 | 0 | 0 | 0 | 0 | 0 | 0 | 0 | 0 | 0 | 0 | 0 | 0 |
| $ZnO$ | 0 | 0 | 0 | 0 | 0 | 0 | 0 | 0 | 0 | 0 | 0 | 0 | 0 | 0 |
| $Na_2O$ | 0 | 0 | 0 | 0 | 2.6 | 0 | 0 | 0 | 0 | 0 | 0 | 0 | 0 | 0 |
| $K_2O$ | 0 | 0 | 0 | 0 | 0 | 0 | 0 | 0 | 0 | 0 | 0.92 | 0 | 0 | 0 |
| $Li_2O$ | 27.54 | 28.59 | 29.8 | 29.52 | 29.08 | 29.8 | 29.93 | 29.25 | 29.66 | 29.52 | 29.3 | 29.66 | 29.52 | 29.25 |
| $CaO$ | 3.72 | 0.94 | 0 | 0.92 | 0 | 0.93 | 0 | 1.83 | 0 | 0 | 0 | 0 | 0 | 0 |
| $B_2O_3$ | 0 | 0 | 0 | 0 | 0 | 0 | 0 | 0 | 0 | 0.65 | 0 | 0 | 0 | 0 |
| $Y_2O_3$ | 0 | 0 | 0 | 0 | 0 | 0 | 0 | 0 | 0.75 | 0 | 0 | 0 | 0 | 0 |
| $La_2O_3$ | 0 | 0 | 0 | 0 | 0 | 0.53 | 0 | 0 | 0 | 0 | 0 | 0 | 0 | 0 |
| $Ta_2O_3$ | 0 | 0 | 0.46 | 0 | 0 | 0 | 0 | 0 | 0 | 0 | 0 | 0 | 0 | 0 |
| $SrO$ | 0 | 0 | 0 | 0 | 0 | 0 | 0 | 0 | 0 | 0 | 0 | 0.46 | 0.92 | 1.83 |

Note: In Table 1, an oxide content of "0" means that the component was not actively or intentionally added to a glass composition in an initial batching process, but the component may be present as an impurity.

Table 2

| Proportions of Various Oxides | S1 | S2 | S3 | S4 | S5 | S6 | S7 | S8 | S9 | S10 | S11 | S12 | S13 | S14 |
|---|---|---|---|---|---|---|---|---|---|---|---|---|---|---|
| $SiO_2+Li_2O$ | 90.09% | 91.17% | 91.62% | 91.24% | 90.95% | 91.56% | 92.52% | 90.40% | 90.91% | 90.58% | 92.47% | 91.67% | 91.24% | 90.40% |
| $SiO_2/Li_2O$ | 2.27 | 2.19 | 2.07 | 2.09 | 2.13 | 2.07 | 2.09 | 2.09 | 2.07 | 2.07 | 2.16 | 2.09 | 2.09 | 2.09 |
| $2.25\times Li_2O-8\times ZrO_2-0.2x-CaO$ | 40.58% | 26.70% | 29.77% | 29.36% | 40.15% | 37.10% | 33.66% | 28.89% | 25.94% | 22.10% | 28.17% | 29.70% | 29.54% | 29.25% |
| $(2.2xZrO_2+0.35xCaO+Na_2O)/Li_7O$ | 0.253 | 0.372 | 0.344 | 0.354 | 0.328 | 0.286 | 0.309 | 0.366 | 0.378 | 0.413 | 0.354 | 0.343 | 0.344 | 0.344 |
| $(CaO+MgO+ZnO+Na_2O+K_2O)/(ZrO_2+Li_2O)$ | 0.124 | 0.069 | 0.000 | 0.027 | 0.081 | 0.028 | 0.000 | 0.054 | 0.000 | 0.000 | 0.027 | 0.000 | 0.000 | 0.000 |
| $(CaO+SrO)/ZrO_2$ | 1.442 | 0.201 | 0.000 | 0.200 | 0.000 | 0.250 | 0.000 | 0.400 | 0.000 | 0.000 | 0.000 | 0.099 | 0.200 | 0.400 |
| $Al_2O_3/(SiO_2+Al_2O_3)$ | 0.024 | 0.000 | 0.022 | 0.022 | 0.022 | 0.022 | 0.022 | 0.022 | 0.022 | 0.022 | 0.000 | 0.022 | 0.022 | 0.022 |

Note: In Table 2, content percentages of oxides in molar percentage were put into various equations, that is, molar unit was not involved in the calculation in the equations.

Table 3

| Microcrystalline Glass | S1 | S2 | S3 | S4 | S5 | S6 | S7 | S8 | S9 | S10 | S11 | S12 | S13 | S14 |
|---|---|---|---|---|---|---|---|---|---|---|---|---|---|---|
| Upper Limit Temperature of Crystal Precipitation (°C) | / | / | 1067.2 | 1053.5 | / | / | / | / | / | / | / | / | / | / |
| Nucleation Temperature (°C) | 525 | 520 | 520 | 520 | 520 | 535 | 530 | 540 | 540 | 540 | 520 | 520 | 520 | 525 |
| Nucleation Isothermal Duration (h) | 4.0 | 4.0 | 4.0 | 4.0 | 4.0 | 4.0 | 4.0 | 4.0 | 4.0 | 4.0 | 4.0 | 4.0 | 4.0 | 4.0 |
| Crystallization Temperature (°C) | 685 | 720 | 710 | 690 | 735 | 715 | 730 | 700 | 730 | 740 | 715 | 690 | 690 | 700 |
| Crystallization Isothermal Duration (h) | 1.0 | 1.5 | 1.0 | 1.5 | 1.0 | 1.5 | 1.0 | 1.5 | 1.5 | 1.5 | 1.5 | 1.5 | 1.5 | 1.5 |
| Primary crystalline phase | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate | Lithium disilicate |
| Crystallinity, wt% | 73.3 | 70.1 | 76.7 | 76.6 | 80.4 | 79.5 | 79.1 | 74.3 | 75.1 | 74.4 | 70.5 | 73.5 | 72.1 | 70.4 |
| Average Crystal Size (nm) | 20.2 | 25.6 | 22.8 | 23.0 | 19.7 | 20.1 | 23.3 | 26.8 | 25.7 | 28.5 | 26.8 | 18.7 | 22.2 | 25.6 |
| Optical Property (0.5 mm thick) — b Value | 0.39 | 0.59 | 0.56 | 0.41 | 0.48 | 0.32 | 0.5 | 0.76 | 0.58 | 0.79 | 0.69 | 0.35 | 0.44 | 0.60 |
| Optical Property (0.5 mm thick) — Transmittance (550 nm) | 90.74 % | 90.47 % | 90.40 % | 90.46 % | 90.71 % | 90.74 % | 90.61 % | 90.22 % | 90.37 % | 90.16 % | 90.33 % | 90.57 % | 90.44 % | 90.25 % |
| Expansion Softening Point (°C) | / | / | 797 | 796 | 810.5 | 792 | / | 777 | / | / | / | / | 778.3 | / |
| Density (g/cm³) | 2.554 7 | 2.572 3 | 2.569 5 | 2.582 6 | 2.548 5 | 2.578 5 | 2.557 6 | 2.585 8 | 2.570 4 | 2.588 0 | 2.565 0 | 2.587 2 | 2.611 2 | 2.638 5 |
| Refractive Index | 1.560 0 | 1.569 5 | 1.567 0 | 1.570 0 | 1.561 0 | 1.569 5 | 1.562 0 | 1.572 0 | 1.568 5 | 1.573 0 | 1.564 5 | 1.569 0 | 1.570 5 | 1.575 5 |
| Young's Modulus (GPa) | 114.5 42 | 116.7 14 | 117.0 73 | 114.2 74 | 115.2 33 | 114.6 20 | 115.9 52 | 119.0 38 | 116.6 54 | 116.2 43 | 117.4 57 | 115.8 74 | 116.0 47 | 118.9 53 |

Note: In Table 3, "/" means not tested.

Table 4

| Chemically Strengthened Microcrystalline Glass | | S1 | S2 | S3 | S4 | S5 | S6 | S7 | S8 | S9 | S10 | S11 | S12 | S13 | S14 |
|---|---|---|---|---|---|---|---|---|---|---|---|---|---|---|---|
| Chemical Strengthening Temperature (°C) | | 500 | 500 | 500 | 500 | 500 | 500 | 500 | 500 | 500 | 500 | 500 | 500 | 500 | 500 |
| Chemical Strengthening Duration (h) | | 4.75 | 1.75 | 1.50 | 2.25 | 2.00 | 2.75 | 1.50 | 2.75 | 1.50 | 1.50 | 1.50 | 1.75 | 2.50 | 3.75 |
| Stress Distribution | CS_50 (MPa) | 173.6 | 225.6 | 227.0 | 230.1 | 177.3 | 213.5 | 195.4 | 242.2 | 224.2 | 226.5 | 206.5 | 244.8 | 247.2 | 255.7 |
| | DOL_0 ($\mu$m) | 114.3 | 115.4 | 110.2 | 116.4 | 117.2 | 114.7 | 115.3 | 117.4 | 115.2 | 112.0 | 112.4 | 115.6 | 113.4 | 110.6 |
| | \|CT_AV\| (MPa) | 104.6 | 147.4 | 140.4 | 162.5 | 108.4 | 134.4 | 129.5 | 164.3 | 149.2 | 153.5 | 130.4 | 166.7 | 170.5 | 171.4 |
| | CT_LD (MPa/mm) | 56769 | 7936 0 | 7851 2 | 8684 0 | 5756 5 | 7274 3 | 6977 5 | 8714 5 | 8044 9 | 8473 2 | 7177 2 | 8961 8 | 9316 1 | 9557 3 |
| Exchange Capacity (wt%) | | 1.14 | 1.34 | 1.29 | 1.20 | 1.09 | 1.18 | 1.25 | 1.09 | 1.35 | 1.30 | 1.20 | 1.14 | 1.06 | 1.02 |
| Appearance of Chemically Strengthened Microcrystalline Glass | | Good | Good | Good | Good | Good | Good | Good | Good | Good | Good | Good | Good | Good | Good |
| Average Anti-Sandpaper Drop Height (m) | | 1.25 | 1.88 | 1.80 | 1.96 | 1.33 | 1.78 | 1.75 | 1.97 | 1.90 | 1.92 | 1.78 | 1.98 | 2.02 | 2.05 |

EP 4 745 101 A1

26

Table 5

| Component (mol%) | D1 | D2 | D3 | D4 | D5 | D6 | D7 | D8 | D9 | D10 | D11 | D12 | D13 | D14 | D15 |
|---|---|---|---|---|---|---|---|---|---|---|---|---|---|---|---|
| $SiO_2$ | 62.77 | 63.39 | 63.47 | 63.16 | 64.39 | 63.17 | 62.58 | 62 | 61.42 | 63.17 | 62.59 | 62.77 | 61.59 | 69.19 | 63.77 |
| $Al_2O_3$ | 1.43 | 1.23 | 1.42 | 1.42 | 1.44 | 1.42 | 1.4 | 1.39 | 1.38 | 1.42 | 1.4 | 1.43 | 1.36 | 4.41 | 1.43 |
| $P_2O_5$ | 1.74 | 1.51 | 1.9 | 1.89 | 1.92 | 1.89 | 1.87 | 1.85 | 1.84 | 1.89 | 1.87 | 1.74 | 1.81 | 1.01 | 1.91 |
| $ZrO_2$ | 2.18 | 2.36 | 2.85 | 3.31 | 2.41 | 2.36 | 2.34 | 2.32 | 2.3 | 2.36 | 2.34 | 2.18 | 6.25 | 2.24 | 2.38 |
| MgO | 0 | 0 | 0 | 0 | 0 | 0 | 0 | 0 | 0 | 0 | 0 | 0 | 0 | 0 | 0 |
| ZnO | 1.67 | 0 | 0 | 0 | 0 | 0 | 0 | 0 | 0 | 0 | 0 | 1.67 | 0 | 0 | 0 |
| $Na_2O$ | 0 | 0 | 0 | 0 | 0 | 0 | 0 | 0 | 0 | 0 | 0 | 0 | 0 | 0.89 | 0 |
| $K_2O$ | 0 | 0 | 0 | 0 | 0 | 0 | 0 | 0 | 0 | 0 | 0 | 0 | 0 | 0.08 | 0 |
| $Li_2O$ | 27.54 | 31.51 | 30.36 | 30.22 | 29.84 | 31.16 | 31.81 | 32.44 | 33.06 | 30.22 | 29.93 | 27.54 | 28.99 | 21.09 | 25.17 |
| CaO | 2.67 | 0 | 0 | 0 | 0 | 0 | 0 | 0 | 0 | 0.94 | 1.87 | 2.67 | 0 | 0.79 | 5.34 |
| $B_2O_3$ | 0 | 0 | 0 | 0 | 0 | 0 | 0 | 0 | 0 | 0 | 0 | 0 | 0 | 0.3 | 0 |
| $Y_2O_3$ | 0 | 0 | 0 | 0 | 0 | 0 | 0 | 0 | 0 | 0 | 0 | 0 | 0 | 0 | 0 |
| $La_2O_3$ | 0 | 0 | 0 | 0 | 0 | 0 | 0 | 0 | 0 | 0 | 0 | 0 | 0 | 0 | 0 |
| $Ta_2O_3$ | 0 | 0 | 0 | 0 | 0 | 0 | 0 | 0 | 0 | 0 | 0 | 0 | 0 | 0 | 0 |
| SrO | 0 | 0 | 0 | 0 | 0 | 0 | 0 | 0 | 0 | 0 | 0 | 0 | 0 | 0 | 0 |

Note: In Table 5, an oxide content of "0" means that the component was not actively or intentionally added to a glass composition in an initial batching process, but the component may be present as an impurity.

Table 6

| Proportions of Various Oxides | D1 | D2 | D3 | D4 | D5 | D6 | D7 | D8 | D9 | D10 | D11 | D12 | D13 | D14 | D15 |
|---|---|---|---|---|---|---|---|---|---|---|---|---|---|---|---|
| $SiO_2+Li_2O$ | 90.31% | 94.90% | 93.83% | 93.38% | 94.23% | 94.33% | 94.39% | 94.44% | 94.48% | 93.39% | 92.52% | 90.31% | 90.58% | 90.28% | 88.94% |
| $SiO_2/Li_2O$ | 2.28 | 2.01 | 2.09 | 2.09 | 2.16 | 2.03 | 1.97 | 1.91 | 1.86 | 2.09 | 2.09 | 2.28 | 2.12 | 3.28 | 2.53 |
| $2.25xLi_2O-8x-ZrO_2-0.2x-CaO$ | 43.99% | 52.02% | 45.51% | 41.52% | 47.86% | 51.23% | 52.85% | 54.43% | 55.99% | 48.93% | 48.25% | 43.99% | 15.23% | 29.37% | 36.52% |
| $(2.2\times ZrO_2+0.35\times CaO+Na_2O)/Li_2O$ | 0.208 | 0.165 | 0.207 | 0.241 | 0.178 | 0.167 | 0.162 | 0.157 | 0.153 | 0.183 | 0.194 | 0.208 | 0.474 | 0.289 | 0.282 |
| $(CaO+MgO+ZnO+Na_2O+K_2O)/(ZrO_2+Li_2O)$ | 0.146 | 0.000 | 0.000 | 0.000 | 0.000 | 0.000 | 0.000 | 0.000 | 0.000 | 0.029 | 0.058 | 0.146 | 0.000 | 0.075 | 0.194 |
| $(CaO+SrO)/ZrO_2$ | 1.225 | 0.000 | 0.000 | 0.000 | 0.000 | 0.000 | 0.000 | 0.000 | 0.000 | 0.398 | 0.799 | 1.225 | 0.000 | 0.353 | 2.244 |
| $Al_2O_3/(SiO_2+Al_2O_3)$ | 0.022 | 0.019 | 0.022 | 0.022 | 0.022 | 0.022 | 0.022 | 0.022 | 0.022 | 0.022 | 0.022 | 0.022 | 0.022 | 0.060 | 0.022 |

Note: In Table 6, content percentages of oxides in molar percentage were put into various equations, that is, molar unit was not involved in the calculation in the equations.

Table 7

| Microcrystalline Glass | | D1 | D2 | D3 | D4 | D5 | D6 | D7 | D8 | D9 | D10 | D11 | D12 | D13 | D14 | D15 |
|---|---|---|---|---|---|---|---|---|---|---|---|---|---|---|---|---|
| Nucleation Temperature (°C) | | 520 | 520 | 520 | 520 | 515 | 520 | 515 | 515 | 515 | 520 | 530 | 520 | 550 | 565 | 520 |
| Nucleation Isothermal Duration (h) | | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| Crystallization Temperature (°C) | | 670 | 710 | 675 | 680 | 715 | 730 | 725 | 730 | 755 | 690 | 690 | 670 | 760 | 700 | 680 |
| Crystallization Isothermal Duration (h) | | 1.0 | 1.0 | 1.5 | 1.5 | 1.5 | 1.5 | 1.0 | 1.0 | 1.0 | 1.0 | 1.0 | 1.0 | 1.5 | 1.5 | 1.0 |
| Primary crystalline phase | | lithium disilicate | lithium disilicate | lithium disilicate | lithium disilicate | lithium disilicate | lithium disilicate | lithium disilicate | lithium disilicate | lithium disilicate | lithium disilicate | lithium disilicate | lithium disilicate | lithium disilicate | petalite, lithium disilicate | lithium disilicate |
| Crystallinity, wt% | | 76.8 | 80.4 | 79.2 | 78.3 | 80.3 | 78.5 | 79.8 | 76.4 | 82.1 | 79.5 | 80.3 | 76.8 | 32.1 | 83.6 | 72.2 |
| Average Crystal Size (nm) | | 19.6 | 19.5 | 19.6 | 21.0 | 19.2 | 22.3 | 30.2 | 35.9 | 37.5 | 20.4 | 21.9 | 19.6 | 65.2 | 19.8 | 23.8 |
| Optical Property (0.5 mm thick) | b Value | 0.30 | 0.32 | 0.35 | 0.31 | 0.31 | 0.39 | 0.86 | 1.20 | 1.35 | 0.41 | 0.55 | 0.30 | devitrified | 0.42 | 0.48 |
| | Transmittance (550 nm) | 91.00 % | 90.94 % | 90.84 % | 90.87 % | 90.83 % | 90.61 % | 90.07 % | 89.01 % | 88.76 % | 90.76 % | 90.41 % | 91.00 % | devitrified | 90.86 % | 90.76 % |
| Density (g/cm$^3$) | | 2.538 5 | 2.510 6 | 2.528 5 | 2.530 3 | 2.506 1 | 2.508 0 | 2.510 5 | 2.513 3 | 2.516 0 | 2.514 1 | 2.526 5 | 2.538 5 | / | 2.510 8 | 2.565 2 |
| Refractive Index | | 1.559 0 | 1.553 5 | 1.559 5 | 1.560 5 | 1.555 0 | 1.556 0 | 1.557 5 | 1.558 5 | 1.560 5 | 1.557 5 | 1.559 5 | 1.559 0 | / | 1.546 5 | 1.563 0 |
| Young's Modulus (GPa) | | 115.6 3 | 116.5 20 | / | 115.7 32 | / | / | / | / | / | 115.0 23 | / | / | / | / | / |

Note: In Table 7, "/" means not tested.

Table 8

| Chemically Strengthened Microcrystalline Glass | D1 | D2 | D3 | D4 | D5 | D6 | D7 | D8 | D9 | D10 | D11 | D12 | D13 | D14 | D15 |
|---|---|---|---|---|---|---|---|---|---|---|---|---|---|---|---|
| Chemical Strengthening Temperature (°C) | 500 | 500 | 500 | 500 | 500 | 500 | 500 | 500 | 500 | 500 | 500 | 520 | / | 500 | 500 |
| Chemical Strengthening Duration (h) | 1.00 | 1.00 | 1.00 | 1.00 | 1.00 | 1.00 | 1.00 | 1.00 | 1.00 | 1.00 | 1.00 | 1.00 | / | 4.50 | 8.50 |
| Stress Distribution — CS_50 (MPa) | / | / | / | / | / | / | / | / | / | / | / | / | / | 105.2 | 134.6 |
| Stress Distribution — DOL_0 (μm) | / | / | / | / | / | / | / | / | / | / | / | / | / | 118.5 | 114.2 |
| Stress Distribution — CT_AV| (MPa) | / | / | / | / | / | / | / | / | / | / | / | / | / | 84.2 | 84.5 |
| Stress Distribution — CT LD (MPa/mm) | / | / | / | / | / | / | / | / | / | / | / | / | / | 44289 | 45900 |
| Exchange Capacity (wt%) | / | / | / | / | / | / | / | / | / | / | / | / | / | 0.53 % | 1.15 % |
| Appearance of Chemically Strengthened Microcrystalline Glass | Surface cracking | Surface cracking | Surface cracking | Surface cracking | Surface cracking | Surface cracking | Surface cracking | Surface cracking | Surface cracking | Surface cracking | Surface cracking | Surface delamination | / | Good | Good |
| Average Anti-Sandpaper Drop Height (m) | 0.45 | 0.52 | 0.55 | 0.75 | 0.45 | 0.44 | 0.45 | 0.47 | 0.43 | 0.45 | 0.65 | 0.40 | / | 0.87 | 0.9 |

Note: In Table 8, "/" means not tested.

As can be seen from results of examples in Table 1-Table 4 and comparative examples in Table 5-Table 8, with respect to the comparative examples, by using solutions in the examples of the present invention, and satisfying a composition characteristic of $0.20 \leq 2.25 \times Li_2O - 8 \times ZrO_2 - 0.2 \times CaO \leq 0.41$ while satisfying content ranges of various oxides, the prepared high-lithium-content microcrystalline glass was suitable for high-temperature chemical strengthening, and could obtain high stress performance after the high-temperature chemical strengthening, the chemically strengthened microcrystalline glass would not have "surface cracking" and/or "delamination", and at the same time, the chemically strengthened microcrystalline glass took into account the excellent optical properties, had relatively high CS_50, |CT_AV|, DOL_0, and CT_LD, and had excellent drop resistance.

However, in solutions of Comparative Example 1-Comparative Example 15, glass formulations thereof failed to simultaneously satisfy the content ranges of various oxides and the composition characteristic of $0.20 \leq 2.25 \times Li_2O - 8 \times ZrO_2 - 0.2 \times CaO \leq 0.41$ in the present invention, and upon high-temperature chemical strengthening on the prepared high-lithium-content microcrystalline glass, the obtained chemically strengthened microcrystalline glass either had the "surface cracking" and/or "delamination" phenomena, or had relatively poor optical properties or stress performance. Herein, in the solutions of Comparative Example 1-Comparative Example 11, the obtained chemically strengthened microcrystalline glass had the "surface cracking" phenomenon, the chemically strengthened microcrystalline glass of Comparative Example 12 had the "delamination" phenomenon, the microcrystalline glass of Comparative Example 13 developed devitrification with relatively poor optical properties, and Comparative Example 14-Comparative Example 15 had a relatively poor stress performance.

Preferred embodiments of the present invention have been described in detail in the above, but the present invention is not limited thereto. Within the scope of technical concept of the present invention, many simple modifications can be made to the technical solutions of the present invention, including combining various technical features in any other suitable ways, and these simple modifications and combinations should also be regarded as contents disclosed in the present invention, and all fall within the scope of protection of the present invention.

**Industrial Applicability**

By enabling the high-lithium-content microcrystalline glass containing the primary crystalline phase lithium disilicate to satisfy the specific composition and structure, particularly to satisfy specific oxide contents and specific oxide content relationships, the present invention not only can ensure it to be chemically strengthened at high temperatures, ensure it to have no "surface cracking" and/or surface "delamination" problems in the high-temperature chemical strengthening process, and improve the chemical strengthening efficiency thereof, but also can ensure the chemically strengthened microcrystalline glass prepared therefrom to have the high stress level (e.g., to have high CS_50, |CT_AV|, DOL_0, etc.) and the high mechanical strength performance. Using the high-lithium-content microcrystalline glass of the present invention can produce the chemically strengthened microcrystalline glass with the excellent optical properties and excellent mechanical strength performance, which is conducive to broadening application scenarios and application fields thereof.

**Claims**

1. A high-lithium-content microcrystalline glass, **characterized in that** the high-lithium-content microcrystalline glass comprises a lithium disilicate crystalline phase, wherein the lithium disilicate crystalline phase has a higher weight percentage than other crystalline phases present in the high-lithium-content microcrystalline glass;
in terms of molar percentage of oxides, a composition of the high-lithium-content microcrystalline glass comprises:

   $SiO_2$: 41.00 mol%-69.50 mol%, $Al_2O_3$: 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and
in terms of contents of various oxides represented by molar percentage in the composition of the high-lithium-content microcrystalline glass, the composition of the high-lithium-content microcrystalline glass satisfies: $0.20 \leq 2.25 \times Li_2O - 8 \times ZrO_2 - 0.2 \times CaO \leq 0.41$, optionally, $0.21 \leq 2.25 \times Li_2O - 8 \times ZrO_2 - 0.2 \times CaO \leq 0.39$.

2. The high-lithium-content microcrystalline glass according to claim 1, wherein in terms of the contents of the various oxides represented by molar percentage in the composition of the high-lithium-content microcrystalline glass, the composition of the high-lithium-content microcrystalline glass further satisfies: $0.25 \leq (2.2 \times ZrO_2 + 0.35 \times CaO + Na_2O) / Li_2O \leq 0.45$; optionally, $0.27 \leq (2.2 \times ZrO_2 + 0.35 \times CaO + Na_2O) / Li_2O \leq 0.43$.

3. The high-lithium-content microcrystalline glass according to claim 1 or 2, wherein in terms of the contents of the various oxides represented by molar percentage in the composition of the high-lithium-content microcrystalline glass, the composition of the high-lithium-content microcrystalline glass satisfies:

$0 \leq (CaO + MgO + ZnO + Na_2O + K_2O) / (ZrO_2 + Li_2O) \leq 0.15$; and/or
$0.90 \leq SiO_2 + Li_2O \leq 0.95$; and/or
$2.00 \leq SiO_2 / Li_2O \leq 2.30$; and/or
$0 \leq (CaO + SrO) / ZrO_2 \leq 1.50$; and/or
$0 \leq Al_2O_3 / (SiO_2 + Al_2O_3) \leq 0.03$.

4. The high-lithium-content microcrystalline glass according to any one of claims 1-3, wherein in terms of molar percentage of the oxides, in the high-lithium-content microcrystalline glass:

a content of $SiO_2$ is 60.00 mol%-65.00 mol%, and optionally, the content of $SiO_2$ is 61.00 mol%-63.50 mol%; and/or
a content of $Li_2O$ is 27.50 mol%-31.00 mol%, and optionally, the content of $Li_2O$ is 28.00 mol%-30.50 mol%; and/or
a content of $ZrO_2$ is 3.00 mol%-6.00 mol%, and optionally, the content of $ZrO_2$ is 3.50 mol%-6.00 mol%; and/or
a content of $P_2O_5$ is 1.50 mol%-2.50 mol%, and optionally, the content of $P_2O_5$ is 1.60 mol%-2.10 mol%; and/or
a content of CaO is 0.00 mol%-4.00 mol%, and optionally, the content of CaO is 0.00 mol%-2.00 mol%.

5. The high-lithium-content microcrystalline glass according to any one of claims 1-4, wherein in terms of molar percentage of the oxides, the composition of the high-lithium-content microcrystalline glass further comprises: $Y_2O_3$: 0.00 mol%-1.00 mol%, $La_2O_3$: 0.00 mol%-1.00 mol%, and $Ta_2O_5$: 0.00 mol%-1.00 mol%.

6. The high-lithium-content microcrystalline glass according to any one of claims 1-5, wherein in terms of the contents of the various oxides represented by molar percentage in the composition of the high-lithium-content microcrystalline glass, the composition of the high-lithium-content microcrystalline glass satisfies:

$0 \leq (CaO + MgO + ZnO + Na_2O + K_2O) / (ZrO_2 + Li_2O) \leq 0.10$; and/or
$0.90 \leq SiO_2 + Li_2O \leq 0.93$; and/or
$0 \leq (CaO + SrO) / ZrO_2 \leq 1.00$, optionally, $0 \leq (CaO + SrO) / ZrO_2 \leq 0.70$.

7. The high-lithium-content microcrystalline glass according to any one of claims 1-6, wherein the high-lithium-content microcrystalline glass has density $\rho \geq 2.54$ g/cm$^3$ and a refractive index $\leq 1.60$.

8. The high-lithium-content microcrystalline glass according to any one of claims 1-7, wherein at a thickness of 0.5 mm, b value of the high-lithium-content microcrystalline glass is $\leq 1.0$, and optionally, the b value is $\leq 0.8$; and/or

the high-lithium-content microcrystalline glass is transparent in a visible light range, and/or
at the thickness of 0.5 mm, for light with a wavelength of 550 nm, a transmittance of the high-lithium-content microcrystalline glass is $\geq 85.00\%$, and optionally, the transmittance is $\geq 90.00\%$.

9. The high-lithium-content microcrystalline glass according to any one of claims 1-8, wherein a crystallinity of the high-lithium-content microcrystalline glass is 30.00 wt%-90.00 wt%, and optionally, the crystallinity is 50.00 wt%-90.00 wt%; and/or
in the high-lithium-content microcrystalline glass, an average crystal size is $\leq 100$ nm, optionally, the average crystal size is $\leq 50$ nm, and further optionally, the average crystal size is 15 nm-45 nm.

10. The high-lithium-content microcrystalline glass according to any one of claims 1-9, wherein Young's modulus of the high-lithium-content microcrystalline glass is $\geq 100.00$ GPa, optionally, the Young's modulus of the high-lithium-content microcrystalline glass is $\geq 110.00$ GPa, and further optionally, the Young's modulus of the high-lithium-content microcrystalline glass is 114 GPa-130 GPa.

11. A chemically strengthened microcrystalline glass, **characterized in that** a composition at a center of the chemically strengthened microcrystalline glass is identical to that of the high-lithium-content microcrystalline glass according to any one of claims 1-10, and the chemically strengthened microcrystalline glass comprises a compression stress layer region extending from a surface of the chemically strengthened microcrystalline glass to a compression depth, and has tensile stress in an interior of the chemically strengthened microcrystalline glass.

12. The chemically strengthened microcrystalline glass according to claim 11, wherein the chemically strengthened microcrystalline glass comprises a lithium disilicate crystalline phase, wherein the lithium disilicate crystalline phase has a higher weight percentage than other crystalline phases present in the chemically strengthened microcrystalline glass; and in terms of molar percentage of oxides, the composition at the center of the chemically strengthened microcrystalline glass comprises:

$SiO_2$: 41.00 mol%-69.50 mol%, $Al_2O_3$: 0.00 mol%-2.00 mol%, $P_2O_5$: 1.50 mol%-3.00 mol%, $ZrO_2$: 2.00 mol%-6.00 mol%, MgO: 0.00 mol%-2.00 mol%, ZnO: 0.00 mol%-2.00 mol%, $Na_2O$: 0.00 mol%-3.00 mol%, $K_2O$: 0.00 mol%-1.00 mol%, $Li_2O$: 27.00 mol%-32.00 mol%, CaO: 0.00 mol%-5.00 mol%, $B_2O_3$: 0.00 mol%-1.00 mol%, and SrO: 0.00 mol%-2.00 mol%; and
in terms of contents of various oxides expressed by molar percentage in the composition at the center of the chemically strengthened microcrystalline glass, the composition at the center of the chemically strengthened microcrystalline glass satisfies: $0.20 \leq 2.25 \times Li_2O - 8 \times ZrO_2 - 0.2 \times CaO \leq 0.41$, optionally, $0.21 \leq 2.25 \times Li_2O - 8 \times ZrO_2 - 0.2 \times CaO \leq 0.39$.

13. The chemically strengthened microcrystalline glass according to claim 11 or 12, wherein the chemically strengthened microcrystalline glass has DOL_0 of 0.20 t-0.25 t, and optionally has DOL_0 of 0.22 t-0.25 t, wherein DOL_0 is depth of a compression stress layer, and t is thickness of the chemically strengthened microcrystalline glass.

14. The chemically strengthened microcrystalline glass according to any one of claims 11-13, wherein the chemically strengthened microcrystalline glass has |CT_AV| of 80 MPa-200 MPa, optionally |CT_AV| of 90 MPa-200 MPa, and further optionally |CT_AV| of 130 MPa-200 MPa, wherein |CT_AV| is an absolute value of average tensile stress.

15. The chemically strengthened microcrystalline glass according to any one of claims 11-14, wherein the chemically strengthened microcrystalline glass has CT_LD of 50,000 MPa/mm-100,000 MPa/mm, optionally CT_LD of 55,000 MPa/mm-100,000 MPa/mm, and further optionally CT_LD of 65,000 MPa/mm-100,000 MPa/mm, wherein CT_LD is tensile stress linear density.

16. The chemically strengthened microcrystalline glass according to any one of claims 11-15, wherein the chemically strengthened microcrystalline glass has CS_50 of 150 MPa-280 MPa, optionally CS_50 of 160 MPa-280 MPa, and further optionally CS_50 of 180 MPa-280 MPa, wherein CS_50 refers to a compressive stress value at a depth of 50 $\mu$m from a main surface of the chemically strengthened microcrystalline glass.

17. The chemically strengthened microcrystalline glass according to any one of claims 11-16, wherein an anti-sandpaper drop test is performed on the chemically strengthened microcrystalline glass with a thickness of 0.5 mm using 80-mesh sandpaper, wherein an average anti-sandpaper drop height of the chemically strengthened microcrystalline glass is $\geq 1.0$ m, optionally, the average anti-sandpaper drop height is $\geq 1.2$ m, and further optionally, the average anti-sandpaper drop height is $\geq 1.5$ m.

18. A glass device, **characterized in that** the glass device comprises the high-lithium-content microcrystalline glass according to any one of claims 1-10 or comprises the chemically strengthened microcrystalline glass according to any one of claims 11-17.

19. An electronic device, **characterized in that** the electronic device comprises the high-lithium-content microcrystalline glass according to any one of claims 1-10 or comprises the chemically strengthened microcrystalline glass according to any one of claims 11-17.

FIG. 1

FIG. 2

FIG. 3

FIG. 4

FIG. 4A

FIG. 4B

FIG. 5

FIG. 6

FIG. 7

FIG. 8

FIG. 9

FIG. 10

FIG. 11

## INTERNATIONAL SEARCH REPORT

| International application No. |
|---|
| **PCT/CN2025/074426** |

| A. | CLASSIFICATION OF SUBJECT MATTER |
|---|---|

C03C10/04(2006.01)i;  C03C21/00(2006.01)i

According to International Patent Classification (IPC) or to both national classification and IPC

| B. | FIELDS SEARCHED |
|---|---|

Minimum documentation searched (classification system followed by classification symbols)

IPC: C03C

Documentation searched other than minimum documentation to the extent that such documents are included in the fields searched

Electronic data base consulted during the international search (name of data base and, where practicable, search terms used)

ENTXT, EXTXTC, VEN, CNTXT, CNABS, ISI, CNKI: 微晶玻璃, 玻璃陶瓷, 氧化硅, 氧化铝, 氧化磷, 氧化锆, 氧化锂, 化学强化, 离子交换, 二硅酸锂, 透明, microcrystalline glass, glass-ceramic, silicon oxide, aluminum oxide, phosphorous oxide, zirconium oxide, lithium oxide, chemically strengthened, ion-exchanged, lithium disilicate, transparent, SiO2, Al2O3, P2O5, ZrO2, Li2O

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2022402809 A1 (CORNING INC.) 22 December 2022 (2022-12-22) description, paragraphs 0006-0051, 0133-0151, and 0190-0193 | 1-19 |
| X | CN 113195424 A (CORNING INC.) 30 July 2021 (2021-07-30) claims 1-29, and description, table 3, and embodiment 2 | 1-19 |
| X | WO 2023032937 A1 (AGC INC.) 09 March 2023 (2023-03-09) claims 1-11, and description, tables 1-2, and embodiment 9 | 1-19 |
| A | CN 109476532 A (CORNING INC.) 15 March 2019 (2019-03-15) entire document | 1-19 |
| A | CN 115703669 A (CHONGQING XINJING SPECIAL GLASS CO., LTD.) 17 February 2023 (2023-02-17) entire document | 1-19 |
| PX | CN 118930054 A (CHONGQING XINJING SPECIAL GLASS CO., LTD.) 12 November 2024 (2024-11-12) claims 1-19 | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 April 2025** | **23 April 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 745 101 A1

**INTERNATIONAL SEARCH REPORT**
**Information on patent family members**

International application No.

**PCT/CN2025/074426**

| Patent document cited in search report | | | Publication date (day/month/year) | Patent family member(s) | | | Publication date (day/month/year) |
|---|---|---|---|---|---|---|---|
| US | 2022402809 | A1 | 22 December 2022 | JP | 2024523293 | A | 28 June 2024 |
| | | | | EP | 4355700 | A1 | 24 April 2024 |
| | | | | WO | 2022266275 | A1 | 22 December 2022 |
| | | | | TW | 202306922 | A | 16 February 2023 |
| | | | | KR | 20240023112 | A | 20 February 2024 |
| CN | 113195424 | A | 30 July 2021 | WO | 2020018393 | A1 | 23 January 2020 |
| | | | | KR | 20220014912 | A | 07 February 2022 |
| | | | | KR | 102618611 | B1 | 27 December 2023 |
| | | | | EP | 3823935 | A1 | 26 May 2021 |
| | | | | US | 2023242438 | A1 | 03 August 2023 |
| | | | | US | 12071364 | B2 | 27 August 2024 |
| | | | | KR | 20210081321 | A | 01 July 2021 |
| | | | | KR | 102356026 | B1 | 08 February 2022 |
| | | | | JP | 2021531229 | A | 18 November 2021 |
| | | | | JP | 7116243 | B2 | 09 August 2022 |
| | | | | AU | 2019308175 | A1 | 18 March 2021 |
| | | | | AU | 2019308175 | B2 | 28 July 2022 |
| | | | | CA | 3129655 | A1 | 23 January 2020 |
| | | | | CA | 3129655 | C | 03 January 2023 |
| | | | | US | 2020017398 | A1 | 16 January 2020 |
| | | | | US | 11014848 | B2 | 25 May 2021 |
| | | | | US | 2021238083 | A1 | 05 August 2021 |
| | | | | US | 11649187 | B2 | 16 May 2023 |
| WO | 2023032937 | A1 | 09 March 2023 | None | | | |
| CN | 109476532 | A | 15 March 2019 | US | 2024051868 | A1 | 15 February 2024 |
| | | | | JP | 2019522620 | A | 15 August 2019 |
| | | | | JP | 7082578 | B2 | 08 June 2022 |
| | | | | US | 2019177210 | A1 | 13 June 2019 |
| | | | | WO | 2017223551 | A1 | 28 December 2017 |
| | | | | US | 2021179484 | A1 | 17 June 2021 |
| | | | | US | 11591256 | B2 | 28 February 2023 |
| | | | | WO | 2017223561 | A1 | 28 December 2017 |
| | | | | EP | 3475236 | A1 | 01 May 2019 |
| | | | | EP | 3475235 | A1 | 01 May 2019 |
| | | | | TW | 202330427 | A | 01 August 2023 |
| | | | | TWI | 816629 | B | 21 September 2023 |
| | | | | TW | 201815715 | A | 01 May 2018 |
| | | | | TWI | 808058 | B | 11 July 2023 |
| | | | | US | 2019256407 | A1 | 22 August 2019 |
| | | | | US | 2023167015 | A1 | 01 June 2023 |
| | | | | US | 11840476 | B2 | 12 December 2023 |
| | | | | KR | 20190022678 | A | 06 March 2019 |
| | | | | KR | 102513539 | B1 | 24 March 2023 |
| CN | 115703669 | A | 17 February 2023 | None | | | |
| CN | 118930054 | A | 12 November 2024 | None | | | |

Form PCT/ISA/210 (patent family annex) (July 2022)

**EP 4 745 101 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410156329